# EUROPEAN PATENT SPECIFICATION

(11) **EP 3 813 428 B1**
(45) Date of publication and mention of the grant of the patent: **18.01.2023**
(21) Application number: 19823747.1
(22) Date of filing: 13.03.2019
(51) Int. Cl.: H04W 76/27, H04W 48/20, H04W 36/00, H04W 92/20, H04W 76/12

(54) **METHOD AND APPARATUS FOR DATA TRANSMISSION IN RRC INACTIVE STATE, AND TERMINAL AND DEVICE**
VERFAHREN UND VORRICHTUNG ZUR DATENÜBERTRAGUNG IM RRC-RUHEZUSTAND SOWIE ENDGERÄT UND VORRICHTUNG
PROCÉDÉ ET APPAREIL DE TRANSMISSION DE DONNÉES DANS UN ÉTAT INACTIF RRC ET TERMINAL ET DISPOSITIF

(30) Priority: 21.06.2018 CN 201810646671
(43) Date of publication of application: 28.04.2021
(73) Proprietor: Datang Mobile Communications Equipment Co., Ltd., Beijing 100083 (CN)
(72) Inventor: ZHOU, Ye, Beijing 100191 (CN); SUN, Jiancheng, Beijing 100191 (CN)
(74) Representative: Studio Torta S.p.A.
(86) International application number: PCT/CN2019/077997
(87) International publication number: WO 2019/242341

(56) References cited:
- EP-A1- 3 413 621
- WO-A1-2018/014741
- CN-A- 101 951 689
- CN-A- 103 348 733
- CN-A- 107 046 735
- US-A1- 2013 182 563
- US-A1- 2014 321 263
- ZTE CORPORATION ET AL: "Considertion on periodic RAN area update procedure", 3GPP DRAFT; R2-1710429 CONSIDERATION ON PERIODIC RAN AREA UPDATE PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Prague, Czech Republic; 20171009 - 20171013 8 October 2017 (2017-10-08), XP051342474, Retrieved from the Internet: URL:http://www.3gpp.org/ftp/Meetings_3GPP_ SYNC/RAN2/Docs/ [retrieved on 2017-10-08]
- CATT: "Periodic RNA update", 3GPP DRAFT; R2-1707908, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317843, Retrieved from the Internet: URL:http://www.3gpp.org/ftp/Meetings_3GPP_ SYNC/RAN2/Docs/ [retrieved on 2017-08-20]
- HTC: "RRC aspects in NB-IoT", 3GPP DRAFT; R2-156425 RRC ASPECTS IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051005844, Retrieved from the Internet: URL:http://www.3gpp.org/ftp/Meetings_3GPP_ SYNC/RAN2/Docs/ [retrieved on 2015-11-16]

## Description

### TECHNICAL FIELD

The present disclosure relates to the field of wireless technology, and in particular to data transmission methods and corresponding devices.

### BACKGROUND

A new RRC state is defined in the New Radio (NR) network: an RRC Inactive state. A node in the radio access network can send an RRC Release message carrying "SuspendConfig" to a User Equipment in an RRC Connected state (also called a user terminal), to instruct the user terminal to enter into the RRC Inactive state. After that, the node is an anchor node of the user terminal, and the context information of the user terminal is stored in the node. The above RRC Release message also includes radio access network notification area (RAN Notification Area, RNA) configuration information, and the user terminal does not need to communicate with the network side when it moves within the configured RNA range.

In the related art, when the user terminal is in the RRC Inactive state and the user terminal needs to interact with the network side, or the user terminal performs the RNA update procedure, the user terminal will trigger the RRC connection resumption procedure. In this case, the anchor node needs to move the context information of the user terminal to a serving node where the user terminal is currently located, that is, the context transfer procedure is performed. However, in the related art, the wireless access network nodes may use a more complex structure such as a centralized unit (Centralized Unit, CU)-control plane (CP)/user plane (User Plane, UP) separation, and the context transfer procedure is relatively complicated. The signaling overhead is large, and the setup delay is long, which is not convenient for small data transmission in the RRC Inactive state. Therefore, it is necessary to improve the data transmission mode in the RRC Inactive state to simplify the data transfer procedure of the user terminal in the RRC Inactive state.

Document by ZTE CORPORATION et al., "Considertion on periodic RAN area update procedure", 3GPP DRAFT, R2-1710429, vol. RAN WG2, no. Prague, Czech Republic, 8 October 2017, discusses the option to generate the RRC message for periodic RLAU without UE context relocation, and the PDCP PDU is transmitted to serving gNB along with Xn message "Retrieve Context Response".

Patent application WO2018/7014741A1 relates to the field of wireless communication technologies, and in particular, to a method and an apparatus for sending, receiving, and transmitting data.

Document by CATT, "Periodic RNA update", 3GPP DRAFT, R2-1707908, vol. RAN WG2, no. Berlin, Germany, 20 August 2017, discusses the context retrieval and anchor relocation, and no context retrieval and anchor relocation, and anchor generates the RRC message and send it via the target gNB to UE which is kept in inactive should be checked with SA3 on NR security.

Document by HTC, "RRC aspects in NB-IoT", 3GPP DRAFT, R2-156425, vol. RAN WG2, no. Anaheim, USA, 16 November 2015, discusses a modified UE behaviour in new CIoT Idle state where relevant AS information is always stored at transition to Idle, triggered by a RRC Suspend procedure, and re-used for a subsequent connection setup by a new type of UE.

Patent application CN 107 046 735 is related to the field of Communications, and specifically to a method and apparatus for connection processing between a terminal and base station.

However, the above-mentioned issues remain unsolved.

### SUMMARY

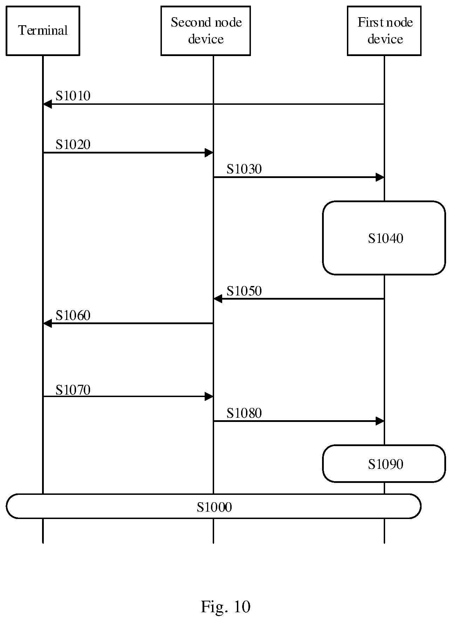

The present invention is defined in the appended claims, to solve the problem in the related art that when the user terminal is in the RRC Inactive state and the RRC connection resumption procedure is triggered, the anchor node move the context information of the user terminal to the serving node where the user terminal is currently located, the context transfer procedure is relatively complicated, setup deadly is long and signaling overhead is large. In particular, the present invention is based on the embodiments disclosed below with reference to Figures 10 to 14 (implementation modes 3 to 7). The remaining embodiments and implementation modes disclosed below have been included for illustrative purposes.

The above technical solutions of the present disclosure have at least the following beneficial effects: in the data transmission method in the RRC Inactive state according to some embodiments of the present disclosure, after the anchor node receives the Retrieve UE Context Request message, it may decide not to perform the context transfer procedure, but to perform data interaction in the form of PDCP PDU through the current serving node of the user terminal, which can avoid the complicated context transfer procedure. When the data to be transmitted is small, the execution procedure can be simplified, the signaling overhead can be saved, and the setup delay can be reduced.

### BRIEF DESCRIPTION OF THE DRAWINGS

Fig. 1 is a schematic diagram showing an architecture of a wireless communication system to which a data transmission method in an RRC Inactive state is applied according to some embodiments of the present disclosure;
Fig. 2 is a schematic flowchart of a data transmission method according to the first embodiment of the present disclosure;
Fig. 3 is a system structure diagram of a data transmission method according to some embodiments of the present disclosure;
Fig. 4 is a schematic flowchart of the data transmission methods according to the second embodiment of the present disclosure;
Fig. 5 is another schematic flowchart of the data transmission method according to the second embodiment of the present disclosure;
Fig. 6 is a schematic flowchart of the data transmission method according to the third embodiment of the present disclosure;
Fig. 7 is another schematic flowchart of the data transmission method according to the third embodiment of the present disclosure;
Fig. 8 is a schematic diagram of a first implementation procedure of the data transmission method according to some embodiments of the present disclosure;
Fig. 9 is a schematic diagram of a second implementation procedure of the data transmission method according to some embodiments of the present disclosure;
Fig. 10 is a schematic diagram of a third implementation procedure of the data transmission method according to some embodiments of the present disclosure;
Fig. 11 is a schematic diagram of a fourth implementation procedure of the data transmission method according to some embodiments of the present disclosure;
Fig. 12 is a schematic diagram of a fifth implementation procedure of the data transmission method according to some embodiments of the present disclosure;
Fig. 13 is a schematic diagram of a sixth implementation procedure of the data transmission method according to some embodiments of the present disclosure;
Fig. 14 is a schematic diagram of a seventh implementation procedure of the data transmission method according to some embodiments of the present disclosure;
Fig. 15 is a schematic diagram showing an implementation structure of a node device according to some embodiments of the present disclosure;
Fig. 16 is a schematic diagram showing another implementation structure of a node device according to some embodiments of the present disclosure;
Fig. 17 is a schematic diagram showing the implementation structure of the device according to some embodiments of the present disclosure;
Fig. 18 is a schematic diagram showing a first structure of a data transmission device according to some embodiments of the present disclosure;
Fig. 19 is a schematic diagram showing a second structure of the data transmission device according to some embodiments of the present disclosure;
Fig. 20 is a schematic diagram showing a third structure of the data transmission device according to some embodiments of the present disclosure.

### DETAILED DESCRIPTION

In order to make the technical problem to be solved by the present disclosure, the technical solution and the advantages of the present disclosure clearer, the drawings and the embodiment are combined for detail description.

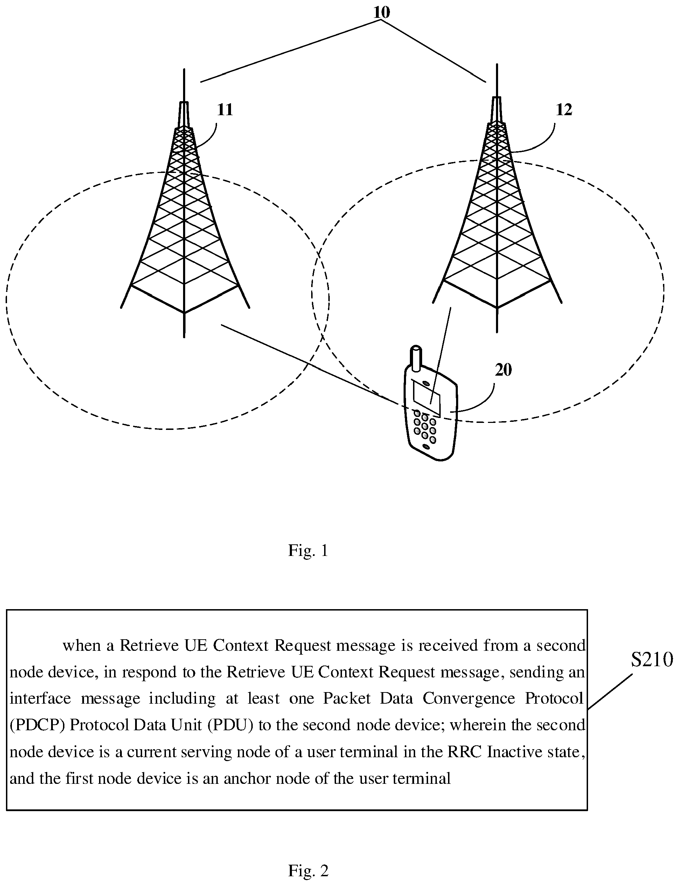

A data transmission method, a node device, and a user terminal in the RRC Inactive state described in some embodiments of the present disclosure are applied to a wireless communication system, and the wireless communication system may be a TD-LTE or NR system. Fig. 1 is a schematic diagram showing an architecture of the wireless communication system provided by some embodiments of the disclosure. As shown in Fig. 1, the wireless communication system includes at least two node devices 10 and a user terminal 20. In practical applications, the at least two node devices 10 are connected in a wireless mode. In order to conveniently and intuitively indicate the connection relationship between the node devices 10, a solid line is used in Fig. 1.

In some embodiments of the present disclosure, each node device 10 may be a base station, and there may be a plurality of base stations included in the wireless communication system. Each base station may be a commonly used base station or an evolved node base station (eNB), may also be a network side device in a 5G system (for example, a next generation node base station (gNB) or a transmission and reception point (TRP) or a cell or other device.

It should be noted that the wireless communication system described in some embodiments of the present disclosure may include a plurality of user terminals 20, and the node device 10 may communicate with the plurality of user terminals 20 for transmitting signaling or data.

Specifically, the user terminal 20 may be a mobile phone, a tablet computer, a notebook computer, an ultra-mobile personal computer (Ultra-Mobile Personal Computer, UMPC), a netbook, or a personal digital assistant (Personal Digital Assistant, PDA), etc.

The wireless communication system of some embodiments of the present disclosure is applied for data transmission of the user terminal 20 in the RRC Inactive state. The RRC Inactive state is another RRC state besides the RRC connected state and the RRC idle state. In principle, the RRC Inactive state is only applied on the access layer (Access Stratum, AS) between the radio access network node and the mobile user terminal, and is not applied on the non-access layer (Non-access Stratum, NAS) between the node device and the core network.

In the wireless communication system of some embodiments of the present disclosure, one node device 11 of the plurality of node devices 10 may send an RRC Release message carrying "SuspendConfig" to one of the user terminals 20 in the RRC connected state, indicating the corresponding user terminal 20 to enter the RRC Inactive state. The node device 11 is the anchor node of the user terminal 20, which stores the context information of the user terminal 20, and the RRC Release message also includes RNA configuration information, so that the user terminal 20 does not need to communicate with the network side when the user terminal moves within the configured RNA range. In addition, when the user terminal 20 is in the coverage area of another node device 12 other than the anchor node, the node device 12 becomes the serving node where the user terminal 20 is currently located.

Further, the user terminal 20 can learn whether it is currently within the configured RNA range by broadcasting. When the user terminal 20 finds that the cell it resides does not belong to the RNA range configured by the RNA configuration information, the user terminal 20 usually initiates an RNA update procedure to request a new RNA from the network side, to ensure that the wireless access network can still find the user terminal 20 by paging.

If the user terminal 20 or the network side needs to send data, or the user terminal 20 needs to perform an RNA update procedure, the user terminal will trigger the RRC connection resumption procedure.

In related art, when the user terminal is in the RRC Inactive state and the RRC connection resumption procedure is triggered based on the above reasons, the anchor node needs to move the context information of the user terminal to the serving node where the user terminal is currently located. The context transfer procedure is cumbersome and the signaling overhead is large. In order to solve the above technical problem, in the data transmission method in the RRC Inactive state described in some embodiments of the present disclosure, when the anchor node of the user terminal in the RRC Inactive state receives the Retrieve UE Context Request message, it may decide not to perform the context transfer procedure, but adopt a mechanism similar to SRB1b in the dual-connection scenario to perform data interaction though the current serving node of the user terminal in the form of Packet Data Convergence Protocol (PDCP) Protocol Data Unit ( PDU), so as to avoid complicated context transfer procedure. When the data capacity to be transmitted is small, the effect of simplifying the procedure, saving signaling overhead, and reducing the establishment delay is achieved.

Specifically, as shown in Fig. 2, the data transmission method in the RRC Inactive state described in one embodiment of the present disclosure is applied to the first node device, the method includes the following step.

S210: if a Retrieve UE Context Request message is received from a second node device, in respond to the Retrieve UE Context Request message, an interface message including at least one PDCP PDU is sent to the second node device. The second node device is a current serving node of a user terminal in an RRC Inactive state, and the first node device is an anchor node of the user terminal.

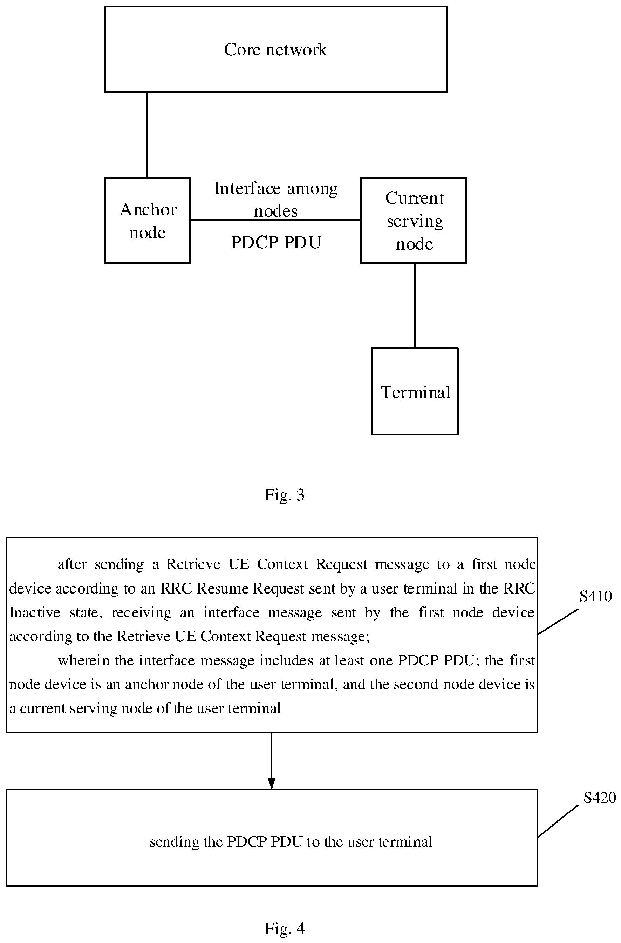

With reference to the schematic diagram of the application architecture of the data transmission method in the RRC Inactive state according to some embodiments of the present disclosure shown in Fig. 3, when a user terminal in the RRC Inactive state moves to a serving range of another wireless access network node (the second node device) that is different from the anchor node (the first node device) and needs to transmit data (either control plane data or user plane data), after receiving the Retrieve UE Context Request message sent based on the RRC Resume Request message of the user terminal, the anchor node of the user terminal determines not to perform the context transfer procedure, but still retains the context information of the user terminal. The control data and user data connection between the radio access network node and the core network is still setup between the anchor node and the core network. In this way, the anchor node interacts the control data and the user data with the user terminal through the current serving node (the second node device) of the user terminal. On the node interface between the anchor node and the current serving node of the user terminal, data is exchanged in the form of PDCP PDU to realize data transmission when the user terminal is in an RRC Inactive state.

After receiving the Retrieve UE Context Request message sent based on the RRC Resume Request message of the user terminal, the anchor node determines not to perform the context transfer procedure, but still retains the context information of the user terminal, which can be regarded as a transient state, in the transient state, data is exchanged in the form of PDCP PDU between the anchor node and the current serving node of the user terminal, to realize data transmission when the user terminal is in an RRC Inactive state. The data transmission procedure does not require a complicated context transfer procedure. When the data to be transmitted is small, the effect of simplifying the execution procedure, saving signaling overhead, and reducing the setup delay can be achieved.

The above-mentioned method of data exchange in the form of PDCP PDU between the anchor node and the current serving node of the user terminal is used in the NR system, which allows the signaling radio bearer (Signaling Radio Bearer, SRB) to adopt a dual-connection structure, through the interaction between the auxiliary node and the user terminal, the signaling delay is reduced, or the reliability of the signaling is improved. By using a mechanism similar to SRB1b in the dual connectivity scenario, the current serving node exchanges data with the user terminal in the form of PDCP PDU, so as to realize the data transmission when the user terminal is in the RRC Inactive state.

Based on the foregoing principle, those skilled in the art should be able to understand the specific network structure for data exchange in the form of PDCP PDU among the anchor node, the current serving node and the user terminal, which will not be described in detail here. In the following, the data transmission methods described in some embodiments of the present disclosure will be described in detail based on the specific procedure of the above data transmission methods.

Optionally, when the data transmission method described in some embodiments of the present disclosure is applied to the first node device, the method further includes: when the Retrieve UE Context Request message sent by the second node device is obtained and it is determined that the Retrieve UE Context Request message includes preset indication information, it is determined not to perform the context transfer procedure. The preset indication information is used to indicate that the context transfer procedure does not need to be performed.

Based on the foregoing implementation, the Retrieve UE Context Request message sent by the current serving node (second node device) of the user terminal to the anchor node (first node device) of the user terminal may include a preset indication information indicating that the context transfer procedure does not need to be performed, so that the anchor node can determine not to perform the context transfer procedure according to the preset indication information.

Optionally, when the user terminal sends an RRC Resume Request to the current serving node, the RRC Resume Request may include preset indication information used to indicate that the context transfer procedure does not need to be performed, so that the current serving node sends the Retrieve UE Context Request message to the anchor node of the user terminal, the preset indication information is carried in the Retrieve UE Context Request message.

Based on the above method, the user terminal can determine whether context transfer is not required, so that the anchor node can determine not to perform the context transfer procedure.

Optionally, in some embodiments of the present disclosure, according to Fig. 2, step S210, the interface message including the PDCP PDU is sent to the second node device, wherein the PDCP PDU includes the RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; and indication information for instructing the user terminal to receive the downlink RRC message through the default SRB2.

Based on the above method, according to the specific instruction information indicated in the RRC message, the user terminal can perform data transmission with the radio access network node.

In addition, according to Fig. 2, in step S210, in the interface message including the PDCP PDU sent to the second node device, the interface message also includes at least one of the following indication information: indication information for instructing the second node device to receive the uplink RRC message through the default SRB1; indication information for instructing the second node device to continue sending downlink RRC messages through the default SRB1; indication information for instructing the second node device to receive the uplink RRC message through the default SRB2; and indication information for instructing the second node device to send a downlink RRC message through the default SRB2.

In the above manner, the indication information indicated in the interface message is used to enable the current serving node of the user terminal to perform data transmission with the anchor node of the user terminal and the user terminal.

Further, in step S210, when the interface message including the PDCP PDU is sent to the second node device, the interface message may be sent to the second node device through the Retrieve UE Context Response message, or the interface message may be sent to the second node device through Retrieve UE Context Failure message.

Another embodiment of the data transmission method in the RRC Inactive state of the present disclosure is applied to a second node device. As shown in Fig. 4, the method includes:

S410: after sending the Retrieve UE Context Request message to the first node device according to an RRC Resume Request sent by the user terminal in the RRC Inactive state, receiving the interface message sent by the first node device according to the Retrieve UE Context Request message. The interface message includes at least one PDCP PDU; the first node device is the anchor node of the user terminal, and the second node device is the current serving node of the user terminal.

Optionally, as shown in Fig. 4, the method further includes:
S420, sending the PDCP PDU to the user terminal.

Based on the above method, when the user terminal is in the RRC Inactive state, the anchor node of the user terminal, the current serving node of the user terminal, and the user terminal can perform data exchange in the form of PDCP PDU to realize data transmission when the user terminal is in the RRC Inactive state. Therefore, the complicated context transfer procedure is avoided, and the execution procedure is simplified, the signaling overhead is saved, and the setup delay is reduced.

In addition, the PDCP PDU in the received interface message in step S410 and the PDCP PDU sent to the user terminal in step S420 include the RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive downlink RRC messages through the default SRB1; indication information for instructing the user terminal to send an uplink RRC message through the default second signaling radio bearer SRB2; and indication information for instructing the user terminal to receive the downlink RRC message through the default SRB2.

Based on the above method, according to the specific instruction information indicated in the RRC message, the user terminal can perform data transmission with the radio access network node.

In addition, the interface message received in step S410 further includes at least one of the following indication information: indication information for instructing the second node device to receive the uplink RRC message through the default SRB1; indication information for instructing the second node device to continue to send the downlink RRC message through the default SRB 1; indication information for instructing the second node device to receive the uplink RRC message through the default SRB2; and indication information for instructing the second node device to send the downlink RRC message through the default SRB2.

In the above mode, the indication information indicated in the interface message is used to enable the current serving node of the user terminal to perform data transmission with the anchor node of the user terminal and the user terminal.

When the interface message includes an indication message for instructing the second node device to receive the uplink RRC message through the default SRB1, the method further includes: receiving the PDCP PDU sent by the user terminal through the default SRB1 and including the uplink RRC message to be sent; sending the PDCP PDU sent by the user terminal to the first node device.

When the interface message includes an indication message for instructing the second node device to continue sending downlink RRC messages through the default SRB1, the method further includes: sending the PDCP PDU including the downlink RRC message to be sent to the user terminal through the default SRB1.

When the interface message includes an indication message for instructing the second node device to receive the uplink RRC message through the default SRB2, the method further includes: receiving the PDCP PDU sent by the user terminal through the default SRB2 and including the uplink RRC message to be sent; sending the PDCP PDU sent by the user terminal to the first node device.

When the interface message includes an indication message for instructing the second node device to send a downlink RRC message through the default SRB2, the method further includes: sending the PDCP PDU including the downlink RRC message to be sent to the user terminal to the user terminal through the default SRB2.

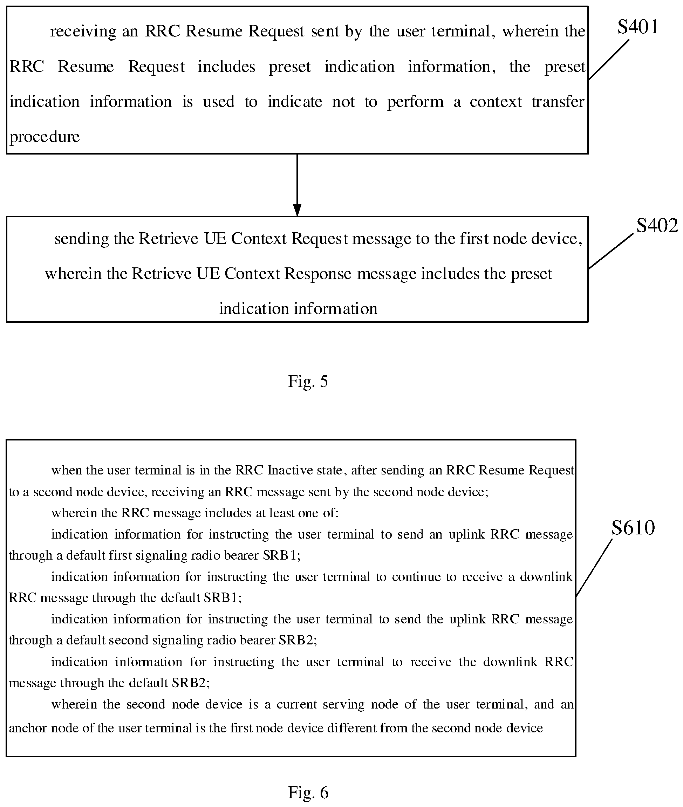

Optionally, when the data transmission method in the RRC Inactive state described in some embodiments of the present disclosure is applied to the second node device, as shown in Fig. 5, the method further includes:

S401: receiving an RRC Resume Request sent by the user terminal, in which the RRC Resume Request includes preset indication information; the preset indication information is used to indicate that a context transfer procedure does not need to be performed;

S402. sending the Retrieve UE Context Request message to the first node device, in which the Retrieve UE Context Response message includes the preset indication information.

Based on the above method, the user terminal can determine whether context transfer is not required, so that the anchor node can determine not to perform the context transfer procedure.

Another embodiment of the data transmission method in the RRC Inactive state described in the present disclosure is applied to a user terminal. As shown in Fig. 6, the method includes the following step.

S610: when the user terminal is in the RRC Inactive state, after sending an RRC Resume Request to the second node device, receiving the RRC message sent by the second node device.

The RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; indication information for instructing the user terminal to receive the downlink RRC message through the default SRB2.

The second node device is a current serving node for the user terminal, and the anchor node of the user terminal is a first node device different from the second node device.

According to some embodiments of the present disclosure, in the data transmission method in the RRC Inactive state, when the user terminal is in the RRC Inactive state and sends an RRC Resume Request to the second node device, the user terminal can receive indication information including the specific data transmission method from the second node device, so as to further perform data transmission according to the indication information indicated in the RRC message.

Optionally, when the RRC message includes an indication message for instructing the user terminal to send an uplink RRC message through the default SRB1, the method further includes: sending the uplink RRC message to the second node device through the default SRB 1.

When the RRC message includes an indication message for instructing the user terminal to continue to receive the downlink RRC message through the default SRB1, the method further includes: continuing to receive the downlink RRC message from the second node device through the default SRB 1.

When the RRC message includes an indication message for instructing the user terminal to send an uplink RRC message through the default SRB2, the method further includes: sending the uplink RRC message to be sent to the second node device through the default SRB2.

When the RRC message includes an indication message for instructing the user terminal to receive the downlink RRC message through the default SRB2, the method further includes: receiving a downlink RRC message from the second node device through the default SRB2.

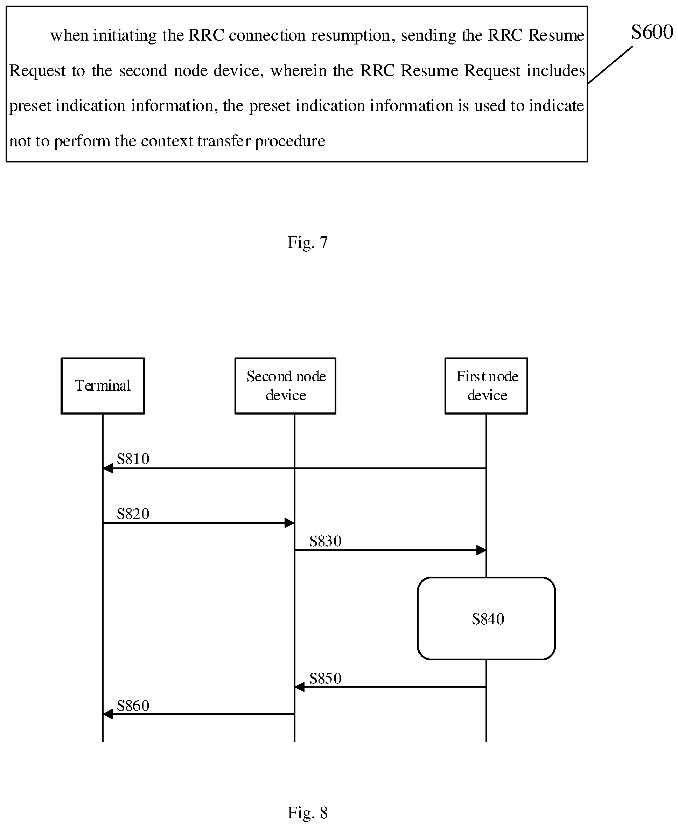

Optionally, when the data transmission method in the RRC Inactive state described in some embodiments of the present disclosure is applied to a user terminal, as shown in Fig. 7, the method further includes the following step.

S600: when initiating the RRC connection resumption, sending the RRC Resume Request to the second node device, in which the RRC Resume Request includes preset indication information; the preset indication information is used to indicate that the context transfer procedure does not need to be performed.

Based on the above method, the user terminal can determine whether the context transfer procedure is not required. When it is determined that the context transfer procedure is not required, the RRC Resume Request sent to the second node device includes a preset indication information for indicating that the context transfer procedure does not need to be performed, so that the anchor node can determine not to perform the context transfer procedure.

When the data transmission method in the RRC Inactive state described in some embodiments of the present disclosure is adopted, data interaction among the user terminal, the anchor node and the current serving node is described based on the following implementation modes 1 to 7.

### Implementation mode one

The data transmission method in the RRC Inactive state described in some embodiments of the present disclosure can be used to update the radio access network area.

As shown in Fig. 8, specifically, the data transmission method includes the following steps.

S810: the first node device in the radio access network sends an RRC Release message to the user terminal, to instruct the user terminal to enter (or maintain) the RRC Inactive state; therefore, the first node device has the user terminal context and becomes the anchor node of the user terminal.

S820: after the user terminal moves to the coverage area of the second node device, the user terminal sends an RRC Resume Request to the second node device; optionally, the RRC Resume Request indicates that the reason for the RRC Resume Request is the radio access network notification area update; therefore, the second node device becomes the current serving node of the user terminal.

S830: the second node device sends the Retrieve UE Context Request message to the first node device, in which the message indicates that the reason for retrieving UE context request is the radio access network notification area update.

S840: the first node device determines that it is not necessary to perform the anchor node change and context transfer procedure, and generates an RRC message with the message name of RRC Release, and the message content instructs the user terminal to maintain the RRC Inactive state; then, the first node device utilize the current PDCP configuration of the user terminal to package this RRC message into one or more PDCP PDUs.

S850: the first node device feeds back an interface message to the second node device, which contains the above-mentioned PDCP PDU.

S860: the second node device directly sends the aforementioned PDCP PDU to the user terminal on the default SRB1, and then releases the air interface resources.

Based on the foregoing implementation mode, when the first node device determines that the anchor node change and context transfer procedure does not need to be performed currently according to the Retrieve UE Context Request message sent by the second node device indicating that the reason is the radio access network notification area update, an RRC message instructing the user terminal to maintain the RRC Inactive state is generated, and the RRC message is packaged into one or more PDCP PDUs, and an interface message including the PDCP PDU is sent to the second node device, and the second node device directly sends a PDCP PDU to the user terminal on the default SRB1, so that the user terminal maintains the RRC Inactive state after receiving the PDCP PDU.

### Implementation mode two

The data transmission method in the RRC Inactive state described in some embodiments of the present disclosure can be used to transmit the RRC connection release message triggered by the core network.

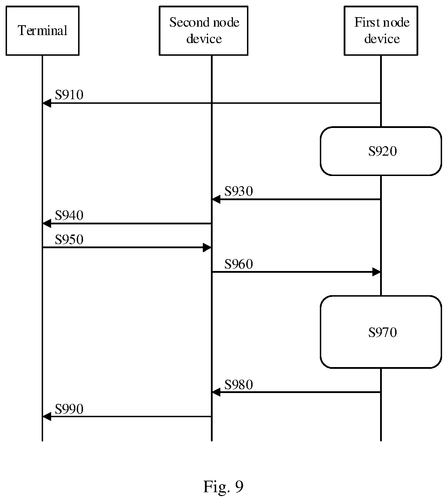

Specifically, as shown in Fig. 9, the method includes the following step.

S910: the first node device in the radio access network sends an RRC Release message to the user terminal, to instruct the user terminal to enter (or maintain) the RRC Inactive state; therefore, the first node device has the user terminal context and becomes the anchor node of the user terminal.

S920: after the user terminal moves to the coverage area of the second node device, the core network sends a message to the radio access network to indicate that the RRC connection of the user terminal needs to be released; currently, the second node device becomes the current serving node of the user terminal, and the first node device can obtain messages sent by the core network.

S930: the first node device initiates a paging procedure, and instructs nodes in a certain area to page the user terminal, and the nodes in the certain area include the second node device.

S940: the second node device pages the user terminal.

S950: after acquiring the paging, the user terminal sends an RRC Resume Request to the second node device, in where the indicated reason is paging.

S960: the second node device sends the Retrieve UE Context Request message to the first node device, in which the indicated reason is paging.

S970: the first node device determines that the anchor node change and context transfer procedure does not need to be performed currently, and an RRC message with the message name of RRCRelease is generated, and the message content instructs the user terminal to release the RRC connection and enter the RRC Idle state; the first node device utilizes the current PDCP configuration of the user terminal to package this RRC message into one or more PDCP PDUs.

S980: the first node device feeds back an interface message to the second node device, the interface message includes the above-mentioned PDCP PDU.

S990: the second node device directly sends the aforementioned PDCP PDU to the user terminal on the default SRB1, and then releases the air interface resources.

After that, the first node device releases the user terminal context at the right timing.

Based on the foregoing implementation mode, when the first node device determines that the anchor node change and context transfer procedure does not need to be performed currently according to the Retrieve UE Context Request message sent by the second node device indicating that the reason is paging, an RRC message instructing the user terminal to release the RRC connection is generated, and the RRC message is packaged into one or more PDCP PDUs, and an interface message including the PDCP PDU is sent to the second node device, and the second node device directly sends a PDCP PDU to the user terminal on the default SRB1, so that the user terminal release the RRC connection after receiving the PDCP PDU.

### Implementation mode three

In the data transmission method in the RRC Inactive state described in some embodiments of the present disclosure, the uplink NAS message can be transmitted through the default SRB1.

Specifically, as shown in Fig. 10, the method includes the following steps.

S1010: the first node device in the radio access network sends an RRC Release message to the user terminal, to instruct the user terminal to enter (or maintain) the RRC Inactive state; therefore, the first node device has the user terminal context and becomes the anchor node of the user terminal.

S 1020: after the user terminal moves to the coverage area of the second node device, when it needs to send uplink NAS messages and the number of the NAS messages to be sent is small, the user terminal may determine that it does not need to enter the RRC Connected state, and send an RRC Resume Request to the second node device, and the RRC Resume Request includes preset indication information used to indicate that the user terminal needs not to enter the RRC Connected state, that is, the context transfer procedure does not need to be performed.

S 1030: the second node device sends the Retrieve UE Context Request message to the first node device, and the message includes the foregoing preset indication information for instructing that the user terminal needs not to enter the RRC Connected state.

S 1040: the first node device determines that it is not necessary to perform the anchor node change and context transfer procedure, and an RRC message is generated, the content of the RRC message is to confirm that the user terminal can send the uplink NAS message through the default SRB 1 (that is, the RRC message includes instruction indication information for instructing the user terminal to send the uplink RRC message through the default SRB1); in addition, the first node device uses the current PDCP configuration of the user terminal to package the RRC message into one or more PDCP PDUs.

S1050: the first node device feeds back an interface message to the second node device, the interface message includes the above-mentioned PDCP PDU, and instructs the second node device not to release air interface resources for the time being, and prepares to receive uplink PDCP PDUs through the default SRB1; that is, the interface message includes indication information for instructing the second node device to receive an uplink RRC message through SRB 1.

S 1060: the second node device directly sends the foregoing PDCP PDU to the user terminal.

S 1070: the user terminal sends one or more PDCP PDUs to the second node device on the default SRB1, the content of which is one or more RRC messages, the message name is UL InformationTransfer, which includes one or more pieces of Uplink NAS messages to be sent.

S 1080: the second node device sends the foregoing PDCP PDU to the first node device through the default SRB1.

S 1090: the first node device sends the NAS message in the PDCP PDU to the core network.

S 1000: the second node device and the user terminal release air interface resources at the right timing.

Based on the foregoing implementation mode, when a user terminal in an RRC Inactive state needs to send uplink NAS messages and the number of the NAS messages to be sent is small, the user terminal may send an RRC Resume Request including preset indication information to the second node device, to indicate that the context transfer procedure does not need to be performed; and the first node device can generate an RRC message indicating that the user terminal can send uplink NAS messages through the default SRB1 according to the RRC Resume Request, and package the RRC messages into one or more PDCP PDUs, to send an interface message including the PDCP PDUs to the second node device, and instruct the second node device to prepare to receive the uplink PDCP PDU through the default SRB 1; after that, the second node device directly sends the PDCP PDU to the user terminal on the default SRB1, and obtains the PDCP PDU to be sent by the user terminal, and transmit the same to the first node device.

Therefore, in the above implementation mode, data is interacted on the node interface among the first node device, the second node device and the user terminal in the form of PDCP PDU, and the uplink NAS message is transmitted through the default SRB1.

### Implementation mode four

In the data transmission method in the RRC Inactive state described in some embodiments of the present disclosure, one RRC message may be used, and the default SRB 1 is used to transmit the downlink NAS message.

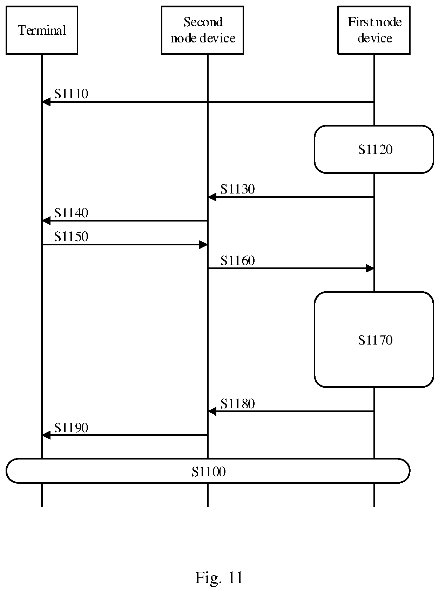

Specifically, as shown in Fig. 11, the method includes the following steps.

S1110: the first node device in the radio access network sends an RRC Release message to the user terminal, to instruct the user terminal to enter (or maintain) the RRC Inactive state; therefore, the first node device has the user terminal context and becomes the anchor node of the user terminal.

S1120: after the user terminal moves to the coverage area of the second node device, the core network sends one or more messages to the radio access network, including one or more NAS messages that should be sent to the user terminal.

S1130: the first node device initiates a paging procedure and instructs nodes in a certain area to page the user terminal, in which the nodes in the certain area include the second node device.

S 1140: the second node device pages the user terminal.

S1150: after acquiring the paging, the user terminal sends an RRC Resume Request to the second node device, in which the indicated reason is paging.

S1160: the second node device sends the Retrieve UE Context Request message to the first node device, in which the indicated reason is paging.

S1170: the first node device determines that there is no need to perform the anchor node change and context transfer procedure, and an RRC message with the message name of DLInformationTransfer is generated, the RRC message includes the downlink NAS message to be sent; the first node device packages this RRC message into one or more PDCP PDUs using the current PDCP configuration of the user terminal.

S1180: the first node device feeds back an interface message to the second node device, which contains the above-mentioned PDCP PDU.

S 1190: the second node device directly sends the foregoing PDCP PDU to the user terminal on the default SRB1.

S 1100: the second node device and the user terminal release air interface resources at the right timing.

Based on the foregoing implementation mode, when the reason of the Retrieve UE Context Request message is paging, and the paging is initiated based on the core network sending a downlink NAS message to the user terminal, the first node device can determine that there is no need to perform anchor node change and context transfer procedure and an RRC message is generated, the RRC message includes a downlink NAS message to be sent to the user terminal, then the RRC message is packaged into one or more PDCP PDUs, and the interface message including the PDCP PDU is sent to the second node device, so that the second node device sends the PDCP PDU to the user terminal through the default SRB1.

Therefore, in the above implementation mode, data is interacted on the node interface among the first node device, the second node device and the user terminal in the form of PDCP PDU, and the downlink NAS message is transmitted through the default SRB 1.

### Implementation mode five

In the data transmission method in the RRC Inactive state described in some embodiments of the present disclosure, one or more RRC messages can be used, and the default SRB1 is used to transmit the downlink NAS message.

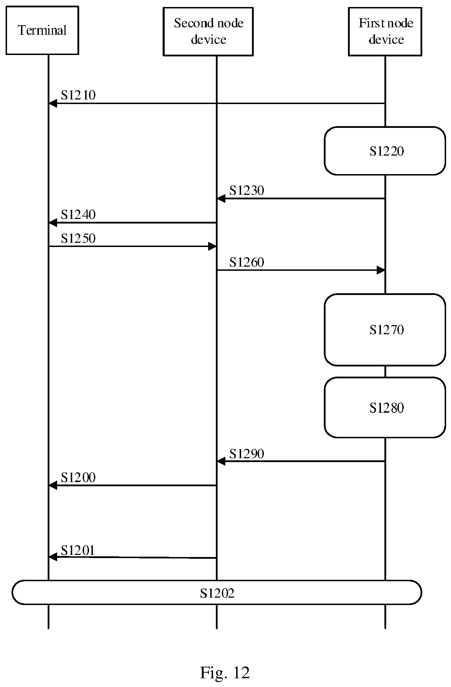

Specifically, as shown in Fig. 12, the method includes the following steps.

S1210: the first node device in the radio access network sends an RRC Release message to the user terminal, to instruct the user terminal to enter (or maintain) the RRC Inactive state; therefore, the first node device has the user terminal context and becomes the anchor node of the user terminal.

S1220: after the user terminal moves to the coverage area of the second node device, the core network sends one or more messages to the radio access network, including one or more NAS messages that should be sent to the user terminal.

S1230: the first node device initiates a paging procedure and instructs nodes in a certain area to page the user terminal, and the nodes in the certain area include the second node device.

S 1240: the second node device pages the user terminal.

S1250: after acquired the paging, the user terminal sends an RRC Resume Request to the second node device, in which the indicated reason is paging.

S1260: the second node device sends the Retrieve UE Context Request message to the first node device, in which the indicated reason is paging.

S1270: the first node device determines that there is no need to perform the anchor node change and context transfer procedure, and an RRC message is generated. The content of the RRC message is to confirm that the user terminal continues to receive the downlink NAS message through SRB1 (that is, the RRC message includes instruction indication information for instructing the user terminal to continue to receive the downlink RRC message through the default SRB1); then the first node device uses the current PDCP configuration of the user terminal to package this RRC message into one or more PDCP PDUs.

S 1280: the first node device generates one or more RRC messages, the message name is DLInformationTransfer, which includes the downlink NAS message to be sent; the first node device uses the current PDCP configuration of the user terminal to package the RRC message into one or more PDCP PDUs.

S1290: the first node device feeds back an interface message to the second node device, which sequentially includes the PDCP PDUs packaged in step S1270 and step S1280, and the interface message includes instruction indication information for instructing the second node device to continue to send the downlink RRC message through the default SRB1.

S1200: the second node device directly sends the PDCP PDUs packaged in step S1270 sequentially to the user terminal on the default SRB1.

S 1201: the second node device directly sends the PDCP PDU packaged in step S1280 sequentially to the user terminal on the default SRB1.

S 1202: the second node device and the user terminal release air interface resources at the right timing.

In the above implementation mode, data is interacted on the node interface among the first node device, the second node device and the user terminal in the form of PDCP PDUs, a plurality of RRC messages are used, and the downlink NAS messages is transmitted through the default SRB1.

### Implementation mode six

In the data transmission method in the RRC Inactive state described in some embodiments of the present disclosure, the default SRB2 can be used to transmit the uplink NAS message.

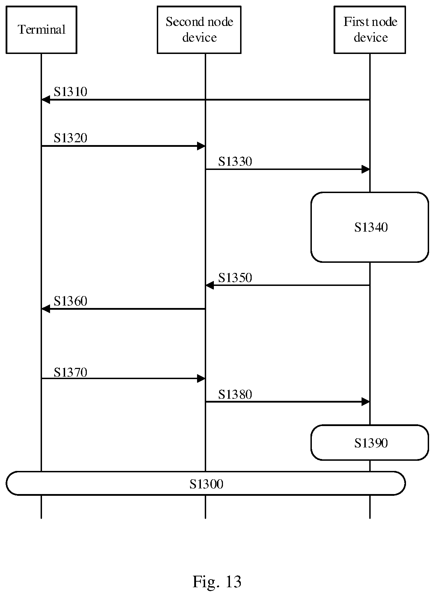

Specifically, as shown in Fig. 13, the method includes the following steps.

S1310: the first node device in the radio access network sends an RRC Release message to the user terminal, to instruct the user terminal to enter (or maintain) the RRC Inactive state; therefore, the first node device has the user terminal context and becomes the anchor node of the user terminal.

S1320: after the user terminal moves to the coverage area of the second node device, when it needs to send uplink NAS messages and the number of the NAS messages to be sent is small, the user terminal may determine that it does not need to enter the RRC Connected state, and send an RRC Resume Request to the second node device, and the RRC Resume Request includes preset indication information, which is used to indicate that the user terminal needs not to enter the RRC Connected state, that is, the context transfer procedure does not need to be performed.

S1330: the second node device sends the Retrieve UE Context Request message to the first node device, and the message includes the foregoing preset indication information to instruct the user terminal not to enter the RRC Connected state.

S 1340. the first node device determines that the anchor node change and context transfer procedure does not need to be performed currently, and an RRC message is generated. The content of the RRC message is to confirm that the user terminal can send an uplink NAS message through the default SRB2 (that is, the RRC message includes instruction indication information for instructing the user terminal to send the uplink RRC message through the default SRB2); in addition, the first node device uses the current PDCP configuration of the user terminal to package the RRC message into one or more PDCP PDUs.

S1350: the first node device feeds back an interface message to the second node device, which contains the above-mentioned PDCP PDU, and instructs the second node device not to release air interface resources for the time being, and prepares to receive uplink PDCP PDUs through the default SRB2; that is, the interface message includes indication information for instructing the second node device to receive the uplink RRC message through SRB2.

S 1360: the second node device directly sends the foregoing PDCP PDU to the user terminal.

S1370: the user terminal sends one or more PDCP PDUs to the second node device on the default SRB2, the content of which is one or more RRC messages, the message name is UL InformationTransfer, which includes one or more Uplink NAS messages to be sent.

S1380: the second node device sends the foregoing PDCP PDU to the first node device through the default SRB1.

S1390: the first node device sends the NAS message in the PDCP PDU to the core network.

S1300: the second node device and the user terminal release air interface resources at the right timing.

In the above implementation mode, data is interacted on the node interface among the first node device, the second node device and the user terminal in the form of PDCP PDU, and the uplink NAS message is transmitted through the default SRB2.

### Implementation mode seven

In the data transmission method in the RRC Inactive state described in some embodiments of the present disclosure, one or more RRC messages can be used, and the default SRB2 is used to transmit the downlink NAS message.

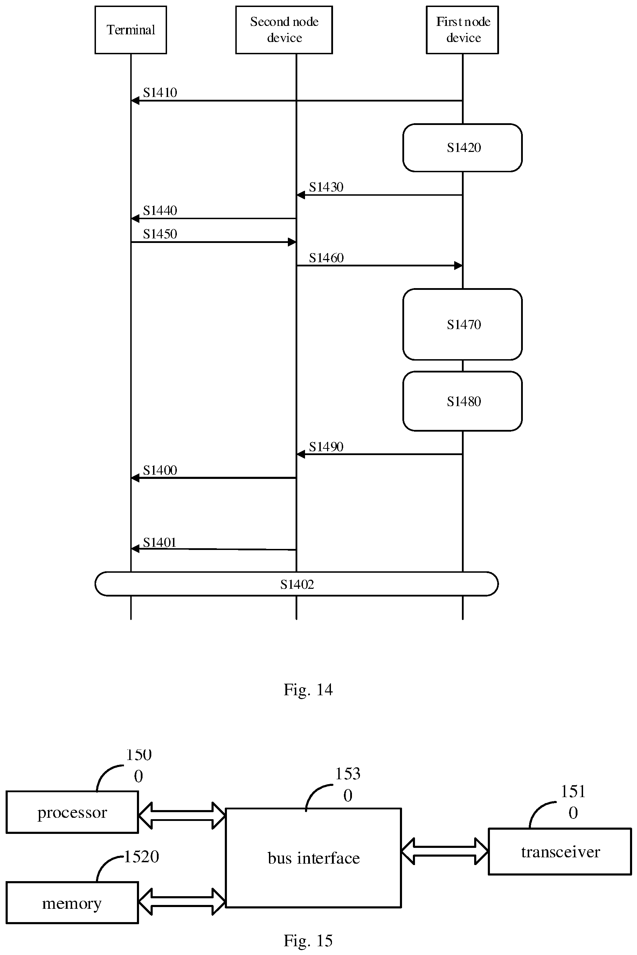

Specifically, as shown in Fig. 14, the method includes the following steps.

S1410: the first node device in the radio access network sends an RRC Release message to the user terminal, to instruct the user terminal to enter (or maintain) the RRC Inactive state; therefore, the first node device has the user terminal context and becomes the anchor node of the user terminal.

S 1420: after the user terminal moves to the coverage area of the second node device, the core network sends one or more messages to the radio access network, including one or more NAS messages that should be sent to the user terminal.

S 1430: the first node device initiates a paging procedure and instructs nodes in a certain area to page the user terminal, and the nodes in the certain area include the second node device.

S 1440: the second node device pages the user terminal.

S 1450: after acquiring the paging, the user terminal sends an RRC Resume Request to the second node device, in which the indicated reason is paging.

S1460: the second node device sends the Retrieve UE Context Request message to the first node device, in which the indicated reason is paging.

S 1470: the first node device determines that there is no need to perform the anchor node change and context transfer procedure, and an RRC message is generated. The content of the message is to confirm that the user terminal continues to receive the downlink NAS message through SRB2 (that is, the RRC message includes instruction indication information for instructing the user terminal to receive the downlink RRC message through the default SRB2); then the first node device uses the current PDCP configuration of the user terminal to package this RRC message into one or more PDCP PDUs.

S1480: the first node device generates one or more RRC messages, the message name is DLInformationTransfer, which contains the downlink NAS message to be sent; the first node device uses the current PDCP configuration of the user terminal to package the RRC message into one or Multiple PDCP PDUs.

S1490: the first node device feeds back an interface message to the second node device, which includes the PDCP PDUs packaged in step S1470 and step S1480 sequentially, and the interface message includes instruction indication information for instructing the second node device to send downlink RRC message through the default SRB2.

S1400: the second node device directly sends the PDCP PDU packaged in step S1470 sequentially to the user terminal on the default SRB2.

S1401: the second node device directly sends the PDCP PDU packaged in step S1480 sequentially to the user terminal on the default SRB2.

S 1402: the second node device and the user terminal release air interface resources at the right timing.

In the above implementation mode, data is interacted on the node interface among the first node device, the second node device and the user terminal in the form of PDCP PDUs, a plurality of RRC messages are used, and the downlink NAS messages is transmitted through the default SRB2.

Fig. 15 is a schematic structural diagram of a node device according to one embodiment of the present disclosure. The node device may be a first node device and includes: a processor 1500, a memory 1520 connected to the processor 1500 through a bus interface 1530, and a transceiver 1510 connected to the processor 1500 through a bus interface. The memory 1520 is used to store programs and data used by the processor when performing operations; and data information or pilots are sent through the transceiver 1510, the uplink control channel is also received through the transceiver 1510. When the processor 1500 calls and executes the programs and data stored in the memory 1520, the following functions are realized.

If a Retrieve UE Context Request message is received from a second node device, in respond to the Retrieve UE Context Request message, an interface message including at least one PDCP PDU is sent to the second node device. The second node device is a current serving node of a user terminal in an RRC Inactive state, and the first node device is an anchor node of the user terminal.

Optionally, the PDCP PDU includes an RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; and indication information for instructing the user terminal to receive the downlink RRC message through the default SRB2.

Optionally, the interface message includes at least one of the following indication information: indication information for instructing the second node device to receive the uplink RRC message through the default SRB1; indication information for instructing the second node device to continue to send the downlink RRC message through the default SRB 1; indication information for instructing the second node device to receive the uplink RRC message through the default SRB2; and indication information for instructing the second node device to send the downlink RRC message through the default SRB2.

Optionally, the processor 1500 sends an interface message to the second node device through a Retrieve UE Context Response message, or sends the interface message to the second node device through a Retrieve UE Context Failure message.

Optionally, the processor 1500 is further configured to, when obtaining the Retrieve UE Context Request message sent by the second node device and determining that the Retrieve UE Context Request message includes preset indication information, determine not to perform context transfer procedure. The preset indication information is used to indicate that the context transfer procedure does not need to be performed.

In addition, in Fig. 15, the bus architecture may include any number of interconnected buses and bridges. Specifically, various circuits of one or more processors represented by the processor 1500 and the memory represented by the memory 1520 are linked together. The bus architecture can also link various other circuits such as peripherals, voltage regulators, power management circuits, etc., which are all known in the art, and therefore, no further description will be given herein. The bus interface provides the interface. The transceiver 1510 may be a plurality of elements, which include a transmitter and a receiver, and provide a unit for communicating with various other devices on the transmission medium. The processor 1500 is responsible for managing the bus architecture and general processing, and the memory 1520 can store data used by the processor 1500 to perform operations.

Those skilled in the art can understand that all or part of the steps in the above-mentioned embodiments can be implemented by hardware, or by a computer program to instruct relevant hardware. The computer program includes instructions for performing part or all of the steps of the above-mentioned method; and the computer program can be stored in a readable storage medium, which can be any form of storage medium.

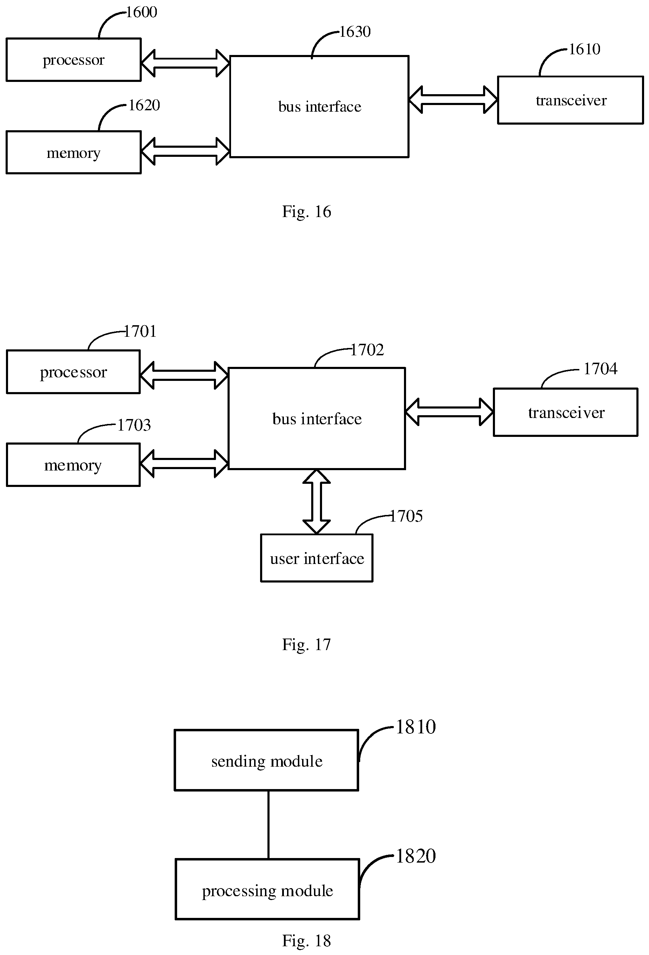

Fig. 16 is a schematic structural diagram of a node device according to another embodiment of the present disclosure. The node device may be a second node device and includes: a processor 1600; a memory 1620 connected to the processor 1600 through a bus interface 1630, and a transceiver 1610 connected to the processor 1600 through a bus interface; the memory 1620 is used to store programs and data used by the processor to perform operations; data information or pilots are sent through the transceiver 1610, the uplink control channel is also received through the transceiver 1610; when the processor 1600 calls and executes the programs and data stored in the memory 1620, the following functions are realized.

After sending the Retrieve UE Context Request message to the first node device according to an RRC Resume Request sent by the user terminal in the RRC Inactive state, the interface message sent by the first node device according to the Retrieve UE Context Request message is received. The interface message includes at least one PDCP PDU; the first node device is the anchor node of the user terminal, and the second node device is the current serving node of the user terminal.

Optionally, the processor 1600 is further configured to: send the PDCP PDU to the user terminal.

Optionally, the PDCP PDU includes an RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive downlink RRC messages through the default SRB1; indication information for instructing the user terminal to send an uplink RRC message through the default second signaling radio bearer SRB2; and indication information for instructing the user terminal to receive the downlink RRC message through the default SRB2.

Optionally, the interface message received in step S410 further includes at least one of the following indication information: indication information for instructing the second node device to receive the uplink RRC message through the default SRB1; indication information for instructing the second node device to continue to send the downlink RRC message through the default SRB 1; indication information for instructing the second node device to receive the uplink RRC message through the default SRB2; and indication information for instructing the second node device to send the downlink RRC message through the default SRB2.

Optionally, when the interface message includes an indication message for instructing the second node device to receive the uplink RRC message through the default SRB1, the processor 1600 is further configured to: receive the PDCP PDU sent by the user terminal through the default SRB1 and including the uplink RRC message to be sent; send the PDCP PDU sent by the user terminal to the first node device.

When the interface message includes an indication message for instructing the second node device to continue to send downlink RRC messages through the default SRB1, the processor 1600 is further configured to: send the PDCP PDU including the downlink RRC message to be sent to the user terminal through the default SRB1.

When the interface message includes an indication message for instructing the second node device to receive the uplink RRC message through the default SRB2, the processor 1600 is further configured to: receive the PDCP PDU sent by the user terminal through the default SRB2 and including the uplink RRC message to be sent; send the PDCP PDU sent by the user terminal to the first node device.

When the interface message includes an indication message for instructing the second node device to send a downlink RRC message through the default SRB2, the processor 1600 is further configured to: send the PDCP PDU including the downlink RRC message to be sent to the user terminal to the user terminal through the default SRB2.

Optionally, the processor 1600 is further configured to: receive an RRC Resume Request sent by the user terminal, in which the RRC Resume Request includes preset indication information; the preset indication information is used to indicate that a context transfer procedure does not need to be performed; and send the Retrieve UE Context Request message to the first node device, in which the Retrieve UE Context Response message includes the preset indication information.

In addition, in Fig. 16, the bus architecture may include any number of interconnected buses and bridges. Specifically, various circuits of one or more processors represented by the processor 1600 and the memory represented by the memory 1620 are linked together. The bus architecture can also link various other circuits such as peripherals, voltage regulators, power management circuits, etc., which are all known in the art, and therefore, no further description will be given herein. The bus interface provides the interface. The transceiver 1610 may be a plurality of elements, which include a transmitter and a receiver, and provide a unit for communicating with various other devices on the transmission medium. The processor 1600 is responsible for managing the bus architecture and general processing, and the memory 1620 can store data used by the processor 1600 to perform operations.

Those skilled in the art can understand that all or part of the steps in the above-mentioned embodiments can be implemented by hardware, or by a computer program to instruct relevant hardware. The computer program includes instructions for performing part or all of the steps of the above-mentioned method; and the computer program can be stored in a readable storage medium, which can be any form of storage medium.

Fig. 17 is a schematic structural diagram of a user terminal according to some embodiments of the present disclosure. The user terminal includes a processor 1701, a memory 1703 connected to the processor 1701 through a bus interface 1702, and a transceiver 1704 connected to the bus interface 1702. The memory 1703 is used to store programs and data used by the processor 1701 to perform operations, the transceiver 1704 is used to receive and send data under the control of the processor 1701, and the processor 1701 calls and executes the programs and data stored in the memory 1703 to perform the following procedure.

When the user terminal is in the RRC Inactive state, after sending an RRC Resume Request to the second node device, the RRC message sent by the second node device is received.

The RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; indication information for instructing the user terminal to receive the downlink RRC message through the default SRB2.

The second node device is the current serving node of the user terminal, and the anchor node of the user terminal is a first node device different from the second node device.

Optionally, when the RRC message includes an indication message for instructing the user terminal to send an uplink RRC message through the default SRB1, the processor 1701 is further configured to send the uplink RRC message to the second node device through the default SRB1.

When the RRC message includes an indication message for instructing the user terminal to continue to receive the downlink RRC message through the default SRB1, the processor 1701 is further configured to continue to receive the downlink RRC message from the second node device through the default SRB1.

When the RRC message includes an indication message for instructing the user terminal to send an uplink RRC message through the default SRB2, the processor 1701 is further configured to send the uplink RRC message to be sent to the second node device through the default SRB2.

When the RRC message includes an indication message for instructing the user terminal to receive the downlink RRC message through the default SRB2, the processor 1701 is further configured to receive a downlink RRC message from the second node device through the default SRB2.

Optionally, the processor 1701 is further configured to when initiating the RRC connection resumption, send the RRC Resume Request to the second node device, in which the RRC Resume Request includes preset indication information; the preset indication information is used to indicate that the context transfer procedure does not need to be performed.

It should be noted that in Fig. 17, the bus architecture may include any number of interconnected buses and bridges. Specifically, various circuits of one or more processors represented by the processor 1701 and the memory represented by the memory 1703 are linked together. The bus architecture can also link various other circuits such as peripherals, voltage regulators, power management circuits, etc., which are all known in the art, and therefore, no further description will be given herein. The bus interface provides the interface. The transceiver 1704 may be a plurality of elements, which include a transmitter and a transceiver, provide a unit for communicating with various other devices on the transmission medium. For different user terminals, the user interface 1705 may also be an interface capable of connecting externally and internally with required device. The connected device includes but not limited to a keypad, a display, a speaker, a microphone, a joystick, etc. The processor 1701 is responsible for managing the bus architecture and general processing, and the memory 1703 can store data used by the processor 1701 to perform operations.

Those skilled in the art can understand that all or part of the steps in the above-mentioned embodiments can be implemented by hardware, or by a computer program to instruct relevant hardware. The computer program includes instructions for performing part or all of the steps of the above-mentioned method; and the computer program can be stored in a readable storage medium, which can be any form of storage medium.

Further, some embodiments of the present disclosure also provide a data transmission device in an RRC Inactive state, which is applied to a first node device. As shown in Fig. 18, the device includes a sending module 1810, configured to, when a Retrieve UE Context Request message is received from a second node device, in respond to the Retrieve UE Context Request message, send an interface message including at least one PDCP PDU to the second node device. The second node device is a current serving node of a user terminal in an RRC Inactive state, and the first node device is an anchor node of the user terminal.

Optionally, the PDCP PDU includes an RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; and indication information for instructing the user terminal to receive the downlink RRC message through the default SRB2.

Optionally, the interface message includes at least one of the following indication information: indication information for instructing the second node device to receive the uplink RRC message through the default SRB1; indication information for instructing the second node device to continue to send the downlink RRC message through the default SRB 1; indication information for instructing the second node device to receive the uplink RRC message through the default SRB2; and indication information for instructing the second node device to send the downlink RRC message through the default SRB2.

Optionally, in the step of sending the interface message including at least one PDCP PDU to the second node device, an interface message is sent to the second node device through a Retrieve UE Context Response message, or the interface message is sent to the second node device through a Retrieve UE Context Failure message.

Optionally, the data transmission device further includes a processing module 1820, configured to, when obtaining the Retrieve UE Context Request message sent by the second node device and determining that the Retrieve UE Context Request message includes preset indication information, determine not to perform context transfer procedure. The preset indication information is used to indicate that the context transfer procedure does not need to be performed.

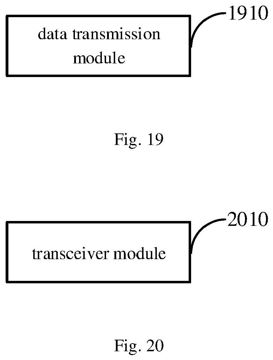

Further, a data transmission device in the RRC Inactive state according another embodiment of the present disclosure is applied to a second node device. As shown in Fig. 19, the device includes: a data transmission module 1910, configured to, after sending the Retrieve UE Context Request message to the first node device according to an RRC Resume Request sent by the user terminal in the RRC Inactive state, receive the interface message sent by the first node device according to the Retrieve UE Context Request message. The interface message includes at least one PDCP PDU; the first node device is the anchor node of the user terminal, and the second node device is the current serving node of the user terminal.

Optionally, the data transmission module 1910 is further configured to: send the PDCP PDU to the user terminal.

Optionally, the PDCP PDU includes an RRC message sent to the user terminal.

Optionally, the RRC message includes at least one of the following indication information: indication information for instructing the user terminal to send an uplink RRC message through the default first signaling radio bearer SRB1; indication information for instructing the user terminal to continue to receive downlink RRC messages through the default SRB1; indication information for instructing the user terminal to send an uplink RRC message through the default second signaling radio bearer SRB2; and indication information for instructing the user terminal to receive the downlink RRC message through the default SRB2.

Optionally, the interface message received in step S410 further includes at least one of the following indication information: indication information for instructing the second node device to receive the uplink RRC message through the default SRB1; indication information for instructing the second node device to continue to send the downlink RRC message through the default SRB 1; indication information for instructing the second node device to receive the uplink RRC message through the default SRB2; and indication information for instructing the second node device to send the downlink RRC message through the default SRB2.

Optionally, when the interface message includes an indication message for instructing the second node device to receive an uplink RRC message through the default SRB1, the data transmission module 1910 is further configured to: receive the PDCP PDU sent by the user terminal through the default SRB 1 and including the uplink RRC message to be sent; send the PDCP PDU sent by the user terminal to the first node device.

When the interface message includes an indication message for instructing the second node device to continue to send downlink RRC messages through the default SRB1, the data transmission module 1910 is further configured to: send the PDCP PDU including the downlink RRC message to be sent to the user terminal through the default SRB 1.

When the interface message includes an indication message for instructing the second node device to receive the uplink RRC message through the default SRB2, the data transmission module 1910 is further configured to: receive the PDCP PDU sent by the user terminal through the default SRB2 and including the uplink RRC message to be sent; send the PDCP PDU sent by the user terminal to the first node device.

When the interface message includes an indication message for instructing the second node device to send a downlink RRC message through the default SRB2, the data transmission module 1910 is further configured to: send the PDCP PDU including the downlink RRC message to be sent to the user terminal to the user terminal through the default SRB2.

Optionally, the data transmission module 1910 is further configured to receive an RRC Resume Request sent by the user terminal, in which the RRC Resume Request includes preset indication information; the preset indication information is used to indicate that a context transfer procedure does not need to be performed; and send the Retrieve UE Context Request message to the first node device, in which the Retrieve UE Context Response message includes the preset indication information.

Further, a data transmission device in the RRC Inactive state according to another embodiment of the present disclosure is applied to a user terminal. As shown in Fig. 20, the device includes: a transceiver module 2010, configured to, when the user terminal is in the RRC Inactive state, after sending an RRC Resume Request to the second node device, receive the RRC message sent by the second node device.

The RRC message includes at least one of the following indication information: indication information for instructing the user terminal to send an uplink RRC message through the default first signaling radio bearer SRB1; indication information for instructing the user terminal to continue to receive a downlink RRC message through the default SRB1; indication information for instructing the user terminal to send an uplink RRC message through the default second signaling radio bearer SRB2; indication information for instructing the user terminal to receive the downlink RRC message through the default SRB2.

The second node device is the current serving node of the user terminal, and the anchor node of the user terminal is a first node device different from the second node device.

Optionally, when the RRC message includes an indication message for instructing the user terminal to send an uplink RRC message through the default SRB 1, the transceiver module 2010 is further configured to send the uplink RRC message to the second node device through the default SRB1.

When the RRC message includes an indication message for instructing the user terminal to continue to receive the downlink RRC message through the default SRB1, the transceiver module 2010 is further configured to continue to receive the downlink RRC message from the second node device through the default SRB1.

When the RRC message includes an indication message for instructing the user terminal to send an uplink RRC message through the default SRB2, the transceiver module 2010 is further configured to send the uplink RRC message to be sent to the second node device through the default SRB2.

When the RRC message includes an indication message for instructing the user terminal to receive the downlink RRC message through the default SRB2, the transceiver module 2010 is further configured to receive a downlink RRC message from the second node device through the default SRB2.

Optionally, the transceiver module 2010 is further configured to when initiating the RRC connection resumption, send the RRC Resume Request to the second node device, in which the RRC Resume Request includes preset indication information; the preset indication information is used to indicate that the context transfer procedure does not need to be performed.

Some embodiments of the present disclosure also provide a computer-readable storage medium storing a computer program on the computer-readable storage medium, and when the computer program is executed by a processor, the data transmission method in the RRC Inactive state as described above is realized and the same technical effect is achieved. In order to avoid repetition, it will not be repeated here. The computer-readable storage medium may be such as read-only memory (ROM), random access memory (RAM), magnetic disk, or optical disk, etc.

The computer-readable storage medium of the present disclosure may be a volatile computer-readable storage medium or a non-volatile computer-readable storage medium.

It should be noted that in this disclosure, the terms "include", "comprise" or any other variants thereof are intended to cover non-exclusive inclusion, so that a procedure, method, article or device including a series of elements not only includes those elements, but also includes other elements not explicitly listed, or elements inherent to the procedure, method, article, or device. Without more restrictions, the element defined by the sentence "including a..." does not exclude the existence of other identical elements in the procedure, method, article or device that includes the element.

Through the description of the above embodiments, those skilled in the art can clearly understand that the method of the above embodiments can be implemented by means of software plus the necessary general hardware platform. Of course, it can also be implemented by hardware, but in many cases the former is better. Based on this understanding, the technical solution of the present disclosure essentially or the part that contributes to the related technology can be embodied in the form of a software product, and the computer software product is stored in a storage medium (such as ROM/RAM, magnetic disk, optical disk) and includes several instructions to make a user terminal (which can be a mobile phone, a computer, a server, an air conditioner, or a network side device, etc.) execute the methods described in the various embodiments of the present disclosure.

## Claims

1. A data transmission method in a Radio Resource Control, RRC, Inactive state, wherein the method is performed by a first node device, and the method comprises:
when a Retrieve UE Context Request message is received (S1030, S1160, S1260, S1330, S1340) from a second node device, in response to the Retrieve UE Context Request message, sending (S1050, S1180, S1290, S1350, S1490) an interface message including at least one Packet Data Convergence Protocol, PDCP, Protocol Data Unit, PDU, to the second node device;
wherein the second node device is a current serving node of a user terminal in the RRC Inactive state, and the first node device is an anchor node of the user terminal;
wherein the at least one PDCP PDU is to be sent from the second node device to the user terminal, wherein the at least one PDCP PDU includes an RRC message;
wherein said method is **characterized in that**,
the RRC message comprises at least one of:
indication information instructing the user terminal to send an uplink RRC message to the second node device through a default first signaling radio bearer SRB 1:
indication information instructing the user terminal to continue to receive a downlink RRC message from the second node device through the default SRB1;
indication information instructing the user terminal to send the uplink RRC message to the second node device through a default second signaling radio bearer SRB2; or
indication information instructing the user terminal to receive the downlink RRC message from the second node device through the default SRB2.

2. The data transmission method in the RRC Inactive state according to claim 1, wherein the interface message further comprises at least one of:
indication information instructing the second node device to receive an uplink RRC message from the user terminal through a default SRB1;
indication information instructing the second node device to continue to send a downlink RRC message to the user terminal through the default SRB1;
indication information instructing the second node device to receive the uplink RRC message from the user terminal through a default SRB2; or
indication information instructing the second node device to send the downlink RRC message to the user terminal through the default SRB2.

3. The data transmission method in the RRC Inactive state according to claim 1, wherein the step of sending an interface message including at least one PDCP PDU to the second node device comprises:
sending the interface message to the second node device through a Retrieve UE Context Response message, or
sending the interface message to the second node device through a Retrieve UE Context Failure message.

4. The data transmission method in the RRC Inactive state according to claim 1, further comprising:
when obtaining the Retrieve UE Context Request message sent by the second node device and determining that the Retrieve UE Context Request message includes preset indication information, determining (S1040, S1170, S1340, S1470) not to perform a context transfer procedure;
wherein the preset indication information indicates not to perform the context transfer procedure.

5. A data transmission method in a Radio Resource Rontrol, RRC, Inactive state, wherein the method is performed by a second node device, and the method comprises:
after sending (S1030, S1160, S1260, S1330, S1340) a Retrieve UE Context Request message to a first node device according to an RRC Resume Request received (S1020, S1150, S1250, S1320, S1450) by the second node device from a user terminal in the RRC Inactive state, receiving (S1050, S1180, S1290, S 1350, S 1490) an interface message sent by the first node device according to the Retrieve UE Context Request message;
wherein the interface message includes at least one PDCP PDU; wherein the at least one PDCP PDU includes an RRC message; the first node device is an anchor node of the user terminal, and the second node device is a current serving node of the user terminal;
sending (S1060, S1190, S1200, S1360, S1400) the at least one PDCP PDU to the user terminal; wherein the at least one PDCP PDU includes said RRC message; wherein said method is **characterized in that** the RRC message comprises at least one of:
indication information instructing the user terminal to send an uplink RRC message to the second node device through a default first signaling radio bearer SRB 1:
indication information instructing the user terminal to continue to receive a downlink RRC message from the second node device through the default SRB 1:
indication information instructing the user terminal to send the uplink RRC message to the second node device through a default second signaling radio bearer SRB2; or
indication information instructing the user terminal to receive the downlink RRC message from the second node device through the default SRB2.

6. The data transmission method in the RRC Inactive state according to claim 5, wherein the interface message further comprises at least one of:
indication information instructing the second node device to receive an uplink RRC message from the user terminal through a default SRB1;
indication information instructing the second node device to continue to send a downlink RRC message to the user terminal through the default SRB1;
indication information instructing the second node device to receive the uplink RRC message from the user terminal through a default SRB2; or
indication information instructing the second node device to send the downlink RRC message to the user terminal through the default SRB2;
wherein
when the interface message includes the indication information instructing the second node device to receive the uplink RRC message from the user terminal through the defaultSRB1, the method further comprises:
receiving (S1070) a PDCP PDU including the uplink RRC message from the user terminal through the default SRB1 ; sending (S1080) the PDCP PDU to the first node device;
when the interface message includes the indication information instructing the second node device to continue to send the downlink RRC message to the user terminal through the default SRB1, the method further comprises: sending (S1190, S1201) a PDCP PDU including the downlink RRC message to the user terminal through the default SRB1;
when the interface message includes the indication information instructing the second node device to receive the uplink RRC message from the user terminal through the default SRB2, the method further comprises: receiving (S1370) a PDCP PDU including the uplink RRC message from the user terminal through the default SRB2 sending (S1380) the PDCP PDU sent by the user terminal to the first node device;
when the interface message includes the indication message instructing the second node device to send the downlink RRC message to the user terminal through the default SRB2, the method further comprises: sending (S1401) a PDCP PDU including the downlink RRC message to the user terminal through the default SRB2.

7. The data transmission method in the RRC Inactive state according to claim 5, further comprising:
receiving the RRC Resume Request sent by the user terminal, wherein the RRC Resume Request includes preset indication information, the preset indication information indicates not to perform a context transfer procedure; and
sending the Retrieve UE Context Request message to the first node device, wherein the Retrieve UE Context Request message includes the preset indication information.

8. A data transmission method in a Radio Resource Control, RRC, Inactive state, wherein said method is performed by a user terminal, and the method comprises:
when the user terminal is in the RRC Inactive state, after sending an RRC Resume Request to a second node device, receiving at least one PDCP PDU sent by a first node device through the second node device , wherein said at least one PDCP PDU includes an RRC message;;
wherein said method is **characterized in that** the RRC message includes at least one of:
indication information instructing the user terminal to send the uplink RRC message to the second node device through a default first signaling radio bearer SRB 1:
indication information instructing the user terminal to continue to receive a downlink RRC message from the second node device through the default SRB 1:
indication information instructing the user terminal to send the uplink RRC message to the second node device through a default second signaling radio bearer SRB2; or
indication information instructing the user terminal to receive the downlink RRC message from the second node device through the default SRB2:
wherein the second node device is a current serving node of the user terminal, and an anchor node of the user terminal is the first node device different from the second node device.

9. The data transmission method in the RRC Inactive state according to claim 8, wherein
when the RRC message includes the indication information instructing the user terminal to send the uplink RRC message through the default SRB 1, the method further comprises sending the uplink RRC message to the second node device through the default SRB1;
when the RRC message includes the indication information instructing the user terminal to continue to receive the downlink RRC message through the default SRB1, the method further comprises continuing to receive the downlink RRC message from the second node device through the default SRB1;
when the RRC message includes the indication information instructing the user terminal to send the uplink RRC message through the default SRB2, the method further comprises sending the uplink RRC message to be sent to the second node device through the default SRB2;
when the RRC message includes the indication information instructing the user terminal to receive the downlink RRC message through the default SRB2, the method further comprises receiving the downlink RRC message from the second node device through the default SRB2,
wherein the data transmission method in the RRC Inactive state further comprises:
when initiating a RRC connection resumption, sending the RRC Resume Request to the second node device, wherein the RRC Resume Request includes preset indication information, wherein the preset indication information indicates not to perform a context transfer procedure.

10. A data transmission device for data transmission in a Radio Resource Control, RRC, Inactive state, wherein the data transmission device is for use in a first node device, wherein the data transmission device comprises:
a sending module, configured to:
receive a Retrieve UE Context Request message from a second node device, send, in response to the Retrieve UE Context Request message, an interface message including at least one PDCP PDU to the second node device,
wherein the second node device is a current serving node of a user terminal in the RRC Inactive state, and the first node device is an anchor node of the user terminal;
wherein the at least one PDCP PDU is to be sent from the second node device to the user terminal, wherein the at least one PDCP PDU includes an RRC message;
wherein said data transmission device is **characterized in that** the RRC message comprises at least one of:
indication information instructing the user terminal to send an uplink RRC message to the second node device through a default first signaling radio bearer SRB1;
indication information instructing the user terminal to continue to receive a downlink RRC message from the second node device through the default SRB 1:
indication information instructing the user terminal to send the uplink RRC message to the second node device through a default second signaling radio bearer SRB2; or
indication information instructing the user terminal to receive the downlink RRC message from the second node device through the default SRB2.

11. A data transmission device for data transmission in a Radio Resource Control, RRC, Inactive state, wherein the data transmission device is for use in a second node device, wherein the data transmission device comprises:
a data transmission module, configured to:
receive an RRC Resume Request from a user terminal in the RRC Inactive state;
send a Retrieve UE Context Request message to a first node device according to the RRC Resume Request sent by the user terminal in the RRC Inactive state, and
receive an interface message sent by the first node device according to the Retrieve UE Context Request message, wherein the interface message includes at least one PDCP PDU; wherein the at least one PDCP PDU includes an RRC message; wherein the first node device is an anchor node of the user terminal, and the second node device is a current serving node of the user terminal;
send the at least one PDCP PDU to the user terminal; wherein the at least one PDCP PDU includes said RRC message ;
wherein said data transmission device is **characterized in that** the RRC message comprises at least one of:
indication information instructing the user terminal to send an uplink RRC message to the second node device through a default first signaling radio bearer SRB 1:
indication information instructing the user terminal to continue to receive a downlink RRC message from the second node device through the default SRB 1:
indication information instructing the user terminal to send the uplink RRC message to the second node device through a default second signaling radio bearer SRB2; or
indication information instructing the user terminal to receive the downlink RRC message from the second node device through the default SRB2.

12. A data transmission device for data transmission in a Radio Resource Control, RRC, Inactive state, wherein the data transmission device is for use in a user terminal, wherein the data transmission device comprises:
a transceiver module, configured to send, when the user terminal is in the RRC Inactive state, an RRC Resume Request to a second node device, and in response thereto, to receive at least one PDCP PDU sent by a first node device through the second node device, wherein said at least one PDCP PDU includes an RRC message;,
wherein said method is **characterized in that** the RRC message includes at least one of the following:
indication information instructing the user terminal to send an uplink RRC message to the second node device through a default first signaling radio bearer SRB1;
indication information instructing the user terminal to continue to receive a downlink RRC message from the second node device through the default SRB1;
indication information instructing the user terminal to send the uplink RRC message to the second node device a default second signaling radio bearer SRB2; or
indication information instructing the user terminal to receive the downlink RRC message from the second node device through the default SRB2,
wherein the second node device is a current serving node of the user terminal, and an anchor node of the user terminal is a first node device different from the second node device.

## Patentansprüche

1. Datenübertragungsverfahren in einem Radio-Resource-Control-Inaktiv-Zustand, RRC-Inaktiv-Zustand, wobei das Verfahren von einer ersten Knotenvorrichtung durchgeführt wird, und das Verfahren umfasst:
wenn eine Retrieve-UE-Context-Request-Nachricht von einer zweiten Knotenvorrichtung als Reaktion auf die Retrieve-UE-Context-Request-Nachricht empfangen wird (S1030, S1160, S1260, S1330, S1340), Senden (S1050, S1180, S1290, S1350, S1490) einer Schnittstellennachricht, die mindestens eine Packet-Data-Convergence-Protocol-Protokolldateneinheit, PDCP-PDU, beinhaltet, an die zweite Knotenvorrichtung;
wobei die zweite Knotenvorrichtung ein aktueller Bedienungsknoten eines Benutzerendgeräts in dem RCC-Inaktiv-Zustand ist, und die erste Knotenvorrichtung ein Ankerknoten des Benutzerendgeräts ist;
wobei die mindestens eine PDCP-PDU von der zweiten Knotenvorrichtung zu dem Benutzerendgerät gesendet werden soll, wobei die mindestens eine PDCP-PDU eine RRC-Nachricht beinhaltet;
wobei das Verfahren, **dadurch gekennzeichnet ist, dass**:
die RRC-Nachricht mindestens eines der Folgenden umfasst:
Angabeinformationen, die das Benutzerendgerät anweisen, eine Uplink-RRC-Nachricht über einen standardmäßigen ersten Signalisierungsfunkträger SRB1 an die zweite Knotenvorrichtung zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von der zweiten Knotenvorrichtung über den Standard-SRB2 zu empfangen.

2. Datenübertragungsverfahren in dem RRC-Inaktiv-Zustand nach Anspruch 1, wobei die Schnittstellennachricht weiter mindestens eines der Folgenden umfasst:
Angabeinformationen, die das zweite Benutzerendgerät anweisen, eine Uplink-RRC-Nachricht von dem Benutzerendgerät über einen Standard-SRB1 zu empfangen;
Angabeinformationen, die die zweite Knotenvorrichtung anweisen, das Senden einer Downlink-RRC-Nachricht an das Benutzerendgerät über den Standard-SRB1 fortzusetzen;
Angabeinformationen, die die zweite Knotenvorrichtung anweisen, die Uplink-RRC-Nachricht von dem Benutzerendgerät über einen Standard-SRB2 zu empfangen; oder
Angabeinformationen, die die zweite Knotenvorrichtung anweisen, die Downlink-RRC-Nachricht an das Benutzerendgerät über den Standard-SRB2 zu senden.

3. Datenübertragungsverfahren in dem RRC-Inaktiv-Zustand nach Anspruch 1, wobei der Schritt des Sendens einer Schnittstellennachricht, die mindestens eine PDCP-PDU beinhaltet, an die zweite Knotenvorrichtung Folgendes umfasst:
Senden der Schnittstellennachricht an die zweite Knotenvorrichtung durch eine Retrieve-UE-Context-Response-Nachricht, oder
Senden der Schnittstellennachricht an die zweite Knotenvorrichtung durch eine Retrieve-UE-Failure-Nachricht.

4. Datenübertragungsverfahren in dem RRC-Inaktiv-Zustand nach Anspruch 1, das weiter Folgendes umfasst:
beim Erhalten der Retrieve-UE-Context-Response-Nachricht, die von der zweiten Knotenvorrichtung gesendet wird, und Bestimmen, dass die Retrieve-UE-Context-Response-Nachricht voreingestellte Angabeinformationen beinhaltet, Bestimmen (S1040, S1170, S1340, S1470), keine Kontexttransfervorgehensweise durchzuführen;
wobei die voreingestellten Angabeinformationen angeben, die Kontexttransfervorgehensweise nicht durchzuführen.

5. Datenübertragungsverfahren in einem Radio-Resource-Control-Inaktiv-Zustand, RRC-Inaktiv-Zustand, wobei das Verfahren von einer zweiten Knotenvorrichtung durchgeführt wird, und das Verfahren umfasst:
nach dem Senden (S1030, S1160, S1260, S1330, S1340) einer Retrieve-UE-Context-Request-Nachricht an eine erste Knotenvorrichtung gemäß einer RRC-Resume-Request, die von der zweiten Knotenvorrichtung von einem Benutzerendgerät in dem RRC-Inaktiv-Zustand empfangen wird (S1020, S1150, S1250, S1320, S1450), Empfangen (S1050, S1180, S1290, S1350, S1490) einer Schnittstellennachricht, die von der ersten Knotenvorrichtung gemäß der Retrieve-UE-Context-Request-Nachricht gesendet wird;
wobei die Schnittstellennachricht mindestens eine PDCP-PDU beinhaltet, wobei die mindestens eine PDCP-PDU eine RRC-Nachricht beinhaltet; die erste Knotenvorrichtung ein Ankerknoten des Benutzerendgeräts ist, und die zweite Knotenvorrichtung ein aktueller Bedienungsknoten des Benutzerendgeräts ist;
Senden (S1060, S1190, S1200, S1360, S1400) der mindestens einen PDCP-PDU an das Benutzerendgerät; wobei die mindestens eine PDCP-PDU die RRC-Nachricht beinhaltet; wobei das Verfahren **dadurch gekennzeichnet ist, dass** die RRC-Nachricht mindestens eines der Folgenden umfasst:
Angabeinformationen, die das Benutzerendgerät anweisen, eine Uplink-RRC-Nachricht über einen standardmäßigen ersten Signalisierungsfunkträger SRB1 an die zweite Knotenvorrichtung zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von der zweiten Knotenvorrichtung über den Standard-SRB2 zu empfangen.

6. Datenübertragungsverfahren in dem RRC-Inaktiv-Zustand nach Anspruch 5, wobei die Schnittstellennachricht weiter mindestens eines der Folgenden umfasst:
Angabeinformationen, die das zweite Benutzerendgerät anweisen, eine Uplink-RRC-Nachricht von dem Benutzerendgerät über einen Standard-SRB1 zu empfangen;
Angabeinformationen, die die zweite Knotenvorrichtung anweisen, das Senden einer Downlink-RRC-Nachricht an das Benutzerendgerät über den Standard-SRB1 fortzusetzen;
Angabeinformationen, die die zweite Knotenvorrichtung anweisen, die Uplink-RRC-Nachricht von dem Benutzerendgerät über einen Standard-SRB2 zu empfangen; oder
Angabeinformationen, die die zweite Knotenvorrichtung anweisen, die Downlink-RRC-Nachricht an das Benutzerendgerät über den Standard-SRB2 zu senden;
wobei,
wenn die Schnittstellennachricht die Angabeinformationen beinhaltet, die die zweite Knotenvorrichtung anweisen, die Uplink-RRC-Nachricht von dem Benutzerendgerät über den Standard-SRB1 zu empfangen, das Verfahren weiter Folgendes umfasst:
Empfangen (S1070) einer PDCP-PDU, die die Uplink-RRC-Nachricht von dem Benutzerendgerät über den Standard-SRB1 beinhaltet; Senden (S1080) der PDCP-PDU an die erste Knotenvorrichtung;
wenn die Schnittstellennachricht die Angabeinformationen beinhaltet, die die zweite Knotenvorrichtung anweisen, das Senden der Downlink-RRC-Nachricht an das Benutzerendgerät über den Standard-SRB1 fortzusetzen, das Verfahren weiter Folgendes umfasst: Senden (S1190, S1201) einer PDCP-PDU, die die Downlink-RRC-Nachricht beinhaltet, an das Benutzerendgerät über den Standard-SRBl;
wenn die Schnittstellennachricht die Angabeinformationen beinhaltet, die die zweite Knotenvorrichtung anweisen, die Uplink-RRC-Nachricht von den Benutzerendgerät über den Standard-SRB2 zu empfangen, das Verfahren weiter Folgendes umfasst: Empfangen (S1370) einer PDCP-PDU, die die Uplink-RRC-Nachricht beinhaltet, von dem Benutzerendgerät über den Standard-SRB2, Senden (S1380) der PDCP-PDU, die von dem Benutzerendgerät gesendet wird, an die erste Knotenvorrichtung;
wenn die Schnittstellennachricht die Angabenachricht beinhaltet, die die zweite Knotenvorrichtung anweisen, die Downlink-RRC-Nachricht an das Benutzerendgerät über den Standard-SRB2 zu senden, das Verfahren weiter Folgendes umfasst: Senden (S1401) einer PDCP-PDU, die die Downlink-RRC-Nachricht beinhaltet, an das Benutzerendgerät über den Standard-SRB2.

7. Datenübertragungsverfahren in dem RRC-Inaktiv-Zustand nach Anspruch 5, das weiter Folgendes umfasst:
Empfangen der RRC-Resume-Request, die von dem Benutzerendgerät gesendet wird, wobei die RRC-Resume-Request voreingestellte Angabeinformationen beinhaltet, wobei die voreingestellten Angabeinformationen angeben, keine Kontexttransfervorgehensweise durchzuführen; und
Senden der Retrieve-UE-Context-Request-Nachricht an die erste Knotenvorrichtung, wobei die Retrieve-UE-Context-Request-Nachricht die voreingestellten Angabeinformationen beinhaltet.

8. Datenübertragungsverfahren in einem Radio-Resource-Control-Inaktiv-Zustand, RRC-Inaktiv-Zustand, wobei das Verfahren von einem Benutzerendgerät durchgeführt wird, und das Verfahren Folgendes umfasst:
wenn sich das Benutzerendgerät in dem RRC-Inaktiv-Zustand befindet, nach dem Senden einer RRC-Resume-Request an eine zweite Knotenvorrichtung, Empfangen mindestens einer PDCP-PDU, die von einer ersten Knotenvorrichtung über die zweite Knotenvorrichtung gesendet wird, wobei die mindestens eine PDCP-PDU eine RRC-Nachricht beinhaltet;
wobei das Verfahren **dadurch gekennzeichnet ist, dass** die RRC-Nachricht mindestens eines der Folgenden beinhaltet:
Angabeinformationen, die das Benutzerendgerät anweisen, die Uplink-RRC-Nachricht an die zweite Knotenvorrichtung über einen standardmäßigen ersten Signalisierungsfunkträger SRB1 zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von der zweiten Knotenvorrichtung über den Standard-SRB2 zu empfangen;
wobei die zweite Knotenvorrichtung ein aktueller Bedienungsknoten des Benutzerendgeräts ist, und ein Ankerknoten des Benutzerendgeräts die erste Knotenvorrichtung ist, die von der zweiten Knotenvorrichtung unterschiedlich ist.

9. Datenübertragungsverfahren in dem RRC-Inaktiv-Zustand nach Anspruch 8, wobei
wenn die RRC-Nachricht die Angabeinformationen beinhaltet, die das Benutzerendgerät anweisen, die Uplink-RRC-Nachricht über den Standard-SRB1 zu senden, das Verfahren weiter das Senden der Uplink-RRC-Nachricht an die zweite Knotenvorrichtung über den Standard-SRB1 umfasst;
wenn die RRC-Nachricht die Angabeinformationen beinhaltet, die das Benutzerendgerät anweisen, das Empfangen der Downlink-RRC-Nachricht über den Standard-SRB1 fortzusetzen, das Verfahren weiter das Fortsetzen des Empfangens der Downlink-RRC-Nachricht von der zweiten Knotenvorrichtung über den Standard-SRB1 umfasst;
wenn die RRC-Nachricht die Angabeinformationen beinhaltet, die das Benutzerendgerät anweisen, die Uplink-RRC-Nachricht über den Standard-SRB2 zu senden, das Verfahren weiter das Senden der Uplink-RRC-Nachricht, die an die zweite Knotenvorrichtung gesendet werden soll, über den Standard-SRB2 umfasst;
wenn die RRC-Nachricht die Angabeinformationen beinhaltet, die das Benutzerendgerät anweisen, die Downlink-RRC-Nachricht über den Standard-SRB2 zu empfangen, das Verfahren weiter das Empfangen der Downlink-RRC-Nachricht von der zweiten Knotenvorrichtung über den Standard-SRB2 umfasst,
wobei das Datenübertragungsverfahren in dem RRC-Inaktiv-Zustand weiter Folgendes umfasst:
beim Initiieren einer RRC-Verbindungswiederaufnahme, Senden der RRC-Resume-Request an die zweite Knotenvorrichtung, wobei die RRC-Resume-Request voreingestellte Angabeinformationen beinhaltet, wobei die voreingestellten Angabeinformationen angeben, keine Kontexttransfervorgehensweise durchzuführen.

10. Datenübertragungsverfahren zur Datenübertragung in einem Radio-Resource-Control-Inaktiv-Zustand, RRC-Inaktiv-Zustand, wobei die Datenübertragungsvorrichtung zur Verwendung in einer ersten Knotenvorrichtung bestimmt ist, wobei die Datenübertragungsvorrichtung Folgendes umfasst:
ein Sendemodul, das konfiguriert ist zum:
Empfangen einer Retrieve-UE-Context-Request-Nachricht von einer zweiten Knotenvorrichtung,
Senden als Reaktion auf die Retrieve-UE-Context-Request-Nachricht einer Schnittstellennachricht, die mindestens eine PDCP-PDU beinhaltet, an die zweite Knotenvorrichtung,
wobei die zweite Knotenvorrichtung ein aktueller Bedienungsknoten eines Benutzerendgeräts in dem RCC-Inaktiv-Zustand ist, und die erste Knotenvorrichtung ein Ankerknoten des Benutzerendgeräts ist;
wobei die mindestens eine PDCP-PDU von der zweiten Knotenvorrichtung zu dem Benutzerendgerät gesendet werden soll, wobei die mindestens eine PDCP-PDU eine RRC-Nachricht beinhaltet;
wobei die Datenübertragungsvorrichtung **dadurch gekennzeichnet ist, dass** die RRC-Nachricht mindestens eines der Folgenden umfasst:
Angabeinformationen, die das Benutzerendgerät anweisen, eine Uplink-RRC-Nachricht über einen standardmäßigen ersten Signalisierungsfunkträger SRB1 an die zweite Knotenvorrichtung zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von der zweiten Knotenvorrichtung über den Standard-SRB2 zu empfangen.

11. Datenübertragungsvorrichtung zur Datenübertragung in einem Radio-Resource-Control-Inaktiv-Zustand, RRC-Inaktiv-Zustand, wobei die Datenübertragungsvorrichtung zur Verwendung in einer zweiten Knotenvorrichtung bestimmt ist, wobei die Datenübertragungsvorrichtung Folgendes umfasst:
ein Datenübertragungsmodul, das konfiguriert ist zum:
Empfangen einer RRC-Resume-Request von einem Benutzerendgerät in dem RRC-Inaktiv-Zustand;
Senden einer Retrieve-UE-Context-Request-Nachricht an eine erste Knotenvorrichtung gemäß der RRC-Resume-Request, die von dem Benutzerendgerät in dem RRC-Inaktiv-Zustand gesendet wird, und
Empfangen einer Schnittstellennachricht, die von der ersten Knotenvorrichtung gemäß der Retrieve-UE-Context-Request-Nachricht gesendet wird, wobei die Schnittstellennachricht mindestens eine PDCP-PDU beinhaltet; wobei die mindestens eine PDCP-PDU eine RRC-Nachricht beinhaltet; wobei die erste Knotenvorrichtung ein Ankerknoten des Benutzerendgeräts ist, und die zweite Knotenvorrichtung ein aktueller Bedienungsknoten des Benutzerendgeräts ist;
Senden der mindestens einen PDCP-PDU an das Benutzerendgerät; wobei die mindestens eine PDCP-PDU die RRC-Nachricht beinhaltet;
wobei die Datenübertragungsvorrichtung **dadurch gekennzeichnet ist, dass** die RRC-Nachricht mindestens eines der Folgenden umfasst:
Angabeinformationen, die das Benutzerendgerät anweisen, eine Uplink-RRC-Nachricht über einen standardmäßigen ersten Signalisierungsfunkträger SRB1 an die zweite Knotenvorrichtung zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von der zweiten Knotenvorrichtung über den Standard-SRB2 zu empfangen.

12. Datenübertragungsvorrichtung zur Datenübertragung in einem Radio-Resource-Control-Inaktiv-Zustand, RRC-Inaktiv-Zustand, wobei die Datenübertragungsvorrichtung zur Verwendung in einem Benutzerendgerät bestimmt ist, wobei die Datenübertragungsvorrichtung Folgendes umfasst:
ein Transceiver-Modul, das dazu konfiguriert ist, wenn das Benutzerendgerät in dem RRC-Inaktiv-Zustand ist, eine RRC-Resume-Request an eine zweiten Knotenvorrichtung zu senden, und als Reaktion darauf mindestens eine PDCP-PDU zu empfangen, die von einer ersten Knotenvorrichtung über die zweite Knotenvorrichtung gesendet wird, wobei die mindestens eine PDCP-PDU eine RRC-Nachricht beinhaltet;
wobei das Verfahren **dadurch gekennzeichnet ist, dass** die RRC-Nachricht mindestens eines der Folgenden beinhaltet:
Angabeinformationen, die das Benutzerendgerät anweisen, eine Uplink-RRC-Nachricht über einen standardmäßigen ersten Signalisierungsfunkträger SRB1 an die zweite Knotenvorrichtung zu senden;
Angabeinformationen, die das Benutzerendgerät anweisen, das Empfangen einer Downlink-RRC-Nachricht von der zweiten Knotenvorrichtung über den standardmäßigen SRB1 fortzusetzen;
Angabeinformationen, die das Benutzerendgerät anweisen, die Uplink-RRC-Nachricht über einen standardmäßigen zweiten Signalisierungsfunkträger SRB2 an die zweite Knotenvorrichtung zu senden; oder
Angabeinformationen, die das Benutzerendgerät anweisen, die Downlink-RRC-Nachricht von einer zweiten Knotenvorrichtung über den Standard-SRB2 zu empfangen;
wobei die zweite Knotenvorrichtung ein aktueller Bedienungsknoten des Benutzerendgeräts ist, und ein Ankerknoten des Benutzerendgeräts eine erste Knotenvorrichtung ist, die von der zweiten Knotenvorrichtung unterschiedlich ist.

## Revendications

1. Procédé de transmission de données dans un état inactif de commande de ressources radio, RRC, dans lequel le procédé est réalisé par un premier dispositif de nœud, et le procédé comprend :
lorsqu'un message de demande de récupération de contexte UE est reçu (S1030, S1160, S1260, S1330, S1340) d'un second dispositif de nœud, en réponse au message de demande de récupération de contexte UE, envoyant (S1050, S1180, S1290, S1350, S1490) un message d'interface incluant au moins une unité de données de protocole, PDU du protocole de convergence de données par paquets, PDCP au second dispositif de noeud ;
dans lequel le second dispositif de nœud est un nœud de desserte actuel d'un terminal utilisateur à l'état inactif RRC, et le premier dispositif de nœud est un nœud d'ancrage du terminal utilisateur ;
dans lequel l'au moins une PDU du PDCP doit être envoyée depuis le second dispositif de nœud au terminal utilisateur, dans lequel l'au moins une PDU du PDCP inclut un message RRC ;
dans lequel ledit procédé est **caractérisé en ce que**,
le message RRC comprend au moins l'un des éléments parmi :
des informations d'indication ordonnant au terminal utilisateur d'envoyer un message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation SRB2 par défaut ; ou
des informations d'indication ordonnant au terminal utilisateur de recevoir le message RRC de liaison descendante depuis le second dispositif de nœud par le biais du SRB2 par défaut.

2. Procédé de transmission de données à l'état inactif RRC selon la revendication 1, dans lequel le message d'interface comprend en outre au moins l'un des éléments parmi :
des informations d'indication ordonnant au second dispositif de nœud de recevoir un message RRC de liaison montante depuis le terminal utilisateur par le biais d'un SRB1 par défaut ;
des informations d'indication ordonnant au second dispositif de nœud de continuer à envoyer un message RRC de liaison descendante au terminal utilisateur par le biais du SRB1 par défaut ;
des informations d'indication ordonnant au second dispositif de nœud de recevoir le message RRC de liaison montante depuis le terminal utilisateur par le biais d'un SRB2 par défaut ; ou
des informations d'indication ordonnant au second dispositif de nœud d'envoyer le message RRC de liaison descendante au terminal utilisateur par le biais du SRB2 par défaut.

3. Procédé de transmission de données à l'état inactif RRC selon la revendication 1, dans lequel l'étape consistant à envoyer un message d'interface incluant au moins une PDU du PDCP au second dispositif de nœud comprend :
l'envoi du message d'interface au second dispositif de nœud par le biais d'un message de réponse de récupération de contexte UE, ou
l'envoi du message d'interface au second dispositif de nœud par le biais d'un message d'échec de récupération de contexte UE.

4. Procédé de transmission de données à l'état inactif RRC selon la revendication 1, comprenant en outre :
lors de l'obtention du message de demande de récupération de contexte UE envoyé par le second dispositif de nœud et de la détermination permettant de savoir si le message de demande de récupération de contexte UE inclut des informations d'indication prédéfinies, la détermination (S1040, S1170, S1340, S1470) de ne pas réaliser une procédure de transfert de contexte ;
dans lequel les informations d'indication prédéfinies indiquent de ne pas réaliser la procédure de transfert de contexte.

5. Procédé de transmission de données dans un état inactif de commande de ressources radio, RRC, dans lequel le procédé est réalisé par un second dispositif de nœud, et le procédé comprend :
après l'envoi (S1030, S1160, S1260, S1330, S1340) d'un message de demande de récupération de contexte UE à un premier dispositif de noeud selon une demande de reprise de RRC reçue (S1020, S1150, S1250, S1320, S1450) par le second dispositif de noeud depuis un terminal utilisateur à l'état inactif RRC, recevant (S1050, S1180, S1290, S1350, S1490) un message d'interface envoyé par le premier dispositif de noeud selon le message de demande de récupération de contexte UE ;
dans lequel le message d'interface inclut au moins une PDU du PDCP ; dans lequel l'au moins une PDU du PDCP inclut un message RRC ; le premier dispositif de noeud est un noeud d'ancrage du terminal utilisateur, et le second dispositif de noeud est un noeud de desserte actuel du terminal utilisateur ;
l'envoi (S1060, S1190, S1200, S1360, S1400) de l'au moins une PDU du PDCP au terminal utilisateur ; dans lequel l'au moins une PDU du PDCP inclut ledit message RRC ; dans lequel ledit procédé est **caractérisé en ce que** le message RRC comprend au moins l'un des éléments parmi :
des informations d'indication ordonnant au terminal utilisateur d'envoyer un message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation SRB2 par défaut ; ou
des informations d'indication ordonnant au terminal utilisateur de recevoir le message RRC de liaison descendante depuis le second dispositif de nœud par le biais du SRB2 par défaut.

6. Procédé de transmission de données à l'état inactif RRC selon la revendication 5, dans lequel le message d'interface comprend en outre au moins l'un des éléments parmi :
des informations d'indication ordonnant au second dispositif de nœud de recevoir un message RRC de liaison montante depuis le terminal utilisateur par le biais d'un SRB1 par défaut ;
des informations d'indication ordonnant au second dispositif de nœud de continuer à envoyer un message RRC de liaison descendante au terminal utilisateur par le biais du SRB1 par défaut ;
des informations d'indication ordonnant au second dispositif de nœud de recevoir le message RRC de liaison montante depuis le terminal utilisateur par le biais d'un SRB2 par défaut ; ou
des informations d'indication ordonnant au second dispositif de nœud d'envoyer le message RRC de liaison descendante au terminal utilisateur par le biais du SRB2 par défaut ;
dans lequel
lorsque le message d'interface inclut les informations d'indication ordonnant au second dispositif de nœud de recevoir le message RRC de liaison montante depuis le terminal utilisateur par le biais du SRB1 par défaut, le procédé comprend en outre :
la réception (S1070) d'une PDU du PDCP incluant le message RRC de liaison montante depuis le terminal utilisateur par le biais du SRB1 par défaut ; l'envoi (S1080) de la PDU du PDCP au premier dispositif de noeud ;
lorsque le message d'interface inclut les informations d'indication ordonnant au second dispositif de nœud de continuer à envoyer le message RRC de liaison descendante au terminal utilisateur par le biais du SRB1 par défaut, le procédé comprend en outre : l'envoi (S1190, S1201) d'une PDU du PDCP incluant le message RRC de liaison descendante au terminal utilisateur par le biais du SRB1 par défaut ;
lorsque le message d'interface inclut les informations d'indication ordonnant au second dispositif de nœud de recevoir le message RRC de liaison montante depuis le terminal utilisateur par le biais du SRB2 par défaut, le procédé comprend en outre : la réception (S1370) d'une PDU du PDCP incluant le message RRC de liaison montante depuis le terminal utilisateur par le biais du SRB2 par défaut envoyant (S1380) la PDU du PDCP envoyée par le terminal utilisateur au premier dispositif de noeud ;
lorsque le message d'interface inclut le message d'indication ordonnant au second dispositif de nœud d'envoyer le message RRC de liaison descendante au terminal utilisateur par le biais du SRB2 par défaut, le procédé comprend en outre : l'envoi (S1401) d'une PDU du PDCP incluant le message RRC de liaison descendante au terminal utilisateur par le biais du SRB2 par défaut.

7. Procédé de transmission de données à l'état inactif RRC selon la revendication 5, comprenant en outre :
la réception de la demande de reprise RRC envoyée par le terminal utilisateur, dans lequel la demande de reprise RRC inclut des informations d'indication prédéfinies, les informations d'indication prédéfinies indiquent de ne pas réaliser une procédure de transfert de contexte ; et
l'envoi du message de demande de récupération de contexte UE au premier dispositif de nœud, dans lequel le message de demande de récupération de contexte UE inclut les informations d'indication prédéfinies.

8. Procédé de transmission de données dans un état inactif de commande de ressources radio, RRC, dans lequel ledit procédé est réalisé par un terminal utilisateur, et le procédé comprend :
lorsque le terminal utilisateur est à l'état inactif RRC, après l'envoi d'une demande de reprise RRC à un second dispositif de nœud, la réception d'au moins une PDU du PDCP envoyée par un premier dispositif de noeud par le biais du second dispositif de nœud, dans lequel ladite au moins une PDU du PDCP inclut un message RRC ;
dans lequel ledit procédé est **caractérisé en ce que** le message RRC inclut au moins l'un des éléments parmi :
des informations d'indication ordonnant au terminal utilisateur d'envoyer le message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation SRB2 par défaut ; ou
des informations d'indication ordonnant au terminal utilisateur de recevoir le message RRC de liaison descendante depuis le second dispositif de nœud par le biais du SRB2 par défaut ;
dans lequel le second dispositif de nœud est un nœud de desserte actuel du terminal utilisateur, et un nœud d'ancrage du terminal utilisateur est le premier dispositif de nœud différent du second dispositif de nœud.

9. Procédé de transmission de données à l'état inactif RRC selon la revendication 8, dans lequel
lorsque le message RRC inclut les informations d'indication ordonnant au terminal utilisateur d'envoyer le message RRC de liaison montante par le biais du SRB1 par défaut, le procédé comprend en outre l'envoi du message RRC de liaison montante au second dispositif de nœud par le biais du SRB1 par défaut ;
lorsque le message RRC inclut les informations d'indication ordonnant au terminal utilisateur de continuer à recevoir le message RRC de liaison descendante par le biais du SRB1 par défaut, le procédé comprend en outre le fait de continuer à recevoir le message RRC de liaison descendante depuis le second dispositif de nœud par le biais du SRB1 par défaut ;
lorsque le message RRC inclut les informations d'indication ordonnant au terminal utilisateur d'envoyer le message RRC de liaison montante par le biais du SRB2 par défaut, le procédé comprend en outre l'envoi du message RRC de liaison montante devant être envoyé au second dispositif de nœud par le biais du SRB2 par défaut ;
lorsque le message RRC inclut les informations d'indication ordonnant au terminal utilisateur de recevoir le message RRC de liaison descendante par le biais du SRB2 par défaut, le procédé comprend en outre la réception du message RRC de liaison descendante depuis le second dispositif de nœud par le biais du SRB2 par défaut,
dans lequel le procédé de transmission de données à l'état inactif RRC comprend en outre :
lors de l'initiation d'une reprise de connexion à une RRC, l'envoi de la demande de reprise RRC au second dispositif de nœud, dans lequel la demande de reprise RRC inclut des informations d'indication prédéfinies, dans lequel les informations d'indication prédéfinies indiquent de ne pas réaliser une procédure de transfert de contexte.

10. Dispositif de transmission de données pour une transmission de données dans un état inactif de commande de ressources radio, RRC, dans lequel le dispositif de transmission de données est destiné à être utilisé dans un premier dispositif de nœud, dans lequel le dispositif de transmission de données comprend :
un module d'envoi, configuré pour :
recevoir un message de demande de récupération de contexte UE depuis un second dispositif de nœud,
envoyer, en réponse au message de demande de récupération de contexte UE, un message d'interface incluant au moins une PDU du PDCP au second dispositif de nœud,
dans lequel le second dispositif de nœud est un nœud de desserte actuel d'un terminal utilisateur à l'état inactif RRC, et le premier dispositif de nœud est un nœud d'ancrage du terminal utilisateur ;
dans lequel l'au moins une PDU du PDCP doit être envoyée depuis le second dispositif de nœud au terminal utilisateur, dans lequel l'au moins une PDU du PDCP inclut un message RRC ;
dans lequel ledit dispositif de transmission de données est **caractérisé en ce que** le message RRC comprend au moins l'un des éléments parmi :
des informations d'indication ordonnant au terminal utilisateur d'envoyer un message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation SRB2 par défaut ; ou
des informations d'indication ordonnant au terminal utilisateur de recevoir le message RRC de liaison descendante depuis le second dispositif de nœud par le biais du SRB2 par défaut.

11. Dispositif de transmission de données pour une transmission de données dans un état inactif de commande de ressources radio, RRC, dans lequel le dispositif de transmission de données est destiné à être utilisé dans un second dispositif de nœud, dans lequel le dispositif de transmission de données comprend :
un module de transmission de données, configuré pour :
recevoir une demande de reprise RRC depuis un terminal utilisateur à l'état inactif RRC ;
envoyer un message de demande de récupération de contexte UE à un premier dispositif de nœud selon la demande de reprise RRC envoyée par le terminal utilisateur à l'état inactif RRC, et
recevoir un message d'interface envoyé par le premier dispositif de nœud selon le message de demande de récupération de contexte UE, dans lequel le message d'interface inclut au moins une PDU du PDCP ; dans lequel l'au moins une PDU du PDCP inclut un message RRC ; dans lequel le premier dispositif de noeud est un noeud d'ancrage du terminal utilisateur, et le second dispositif de noeud est un noeud de desserte actuel du terminal utilisateur ;
envoyer l'au moins une PDU du PDCP au terminal utilisateur ; dans lequel l'au moins une PDU du PDCP inclut ledit message RRC ;
dans lequel ledit dispositif de transmission de données est **caractérisé en ce que** le message RRC comprend au moins l'un des éléments parmi :
des informations d'indication ordonnant au terminal utilisateur d'envoyer un message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation SRB2 par défaut ; ou
des informations d'indication ordonnant au terminal utilisateur de recevoir le message RRC de liaison descendante depuis le second dispositif de nœud par le biais du SRB2 par défaut.

12. Dispositif de transmission de données pour une transmission de données dans un état inactif de commande de ressources radio, RRC, dans lequel le dispositif de transmission de données est destiné à être utilisé dans un terminal utilisateur, dans lequel le dispositif de transmission de données comprend :
un module émetteur-récepteur, configuré pour envoyer, lorsque le terminal utilisateur est à l'état inactif RRC, une demande de reprise RRC à un second dispositif de nœud, et en réponse à celui-ci, pour recevoir au moins une PDU du PDCP envoyée par un premier dispositif de nœud par le biais du second dispositif de nœud, dans lequel ladite au moins une PDU du PDCP inclut un message RRC ;
dans lequel ledit procédé est **caractérisé en ce que** le message RRC inclut au moins l'un des éléments parmi :
des informations d'indication ordonnant au terminal utilisateur d'envoyer un message RRC de liaison montante au second dispositif de nœud par le biais d'un premier support radio de signalisation SRB1 par défaut ;
des informations d'indication ordonnant au terminal utilisateur de continuer à recevoir un message RRC de liaison descendante depuis le second dispositif de nœud par le biais du SRB1 par défaut ;
des informations d'indication ordonnant au terminal utilisateur d'envoyer le message RRC de liaison montante au second dispositif de nœud par le biais d'un second support radio de signalisation par défaut SRB2 ; ou
des informations d'indication ordonnant au terminal utilisateur de recevoir le message RRC de liaison descendante depuis le second dispositif de nœud par le biais du SRB2 par défaut,
dans lequel le second dispositif de nœud est un nœud de desserte actuel du terminal utilisateur, et un nœud d'ancrage du terminal utilisateur est un premier dispositif de nœud différent du second dispositif de nœud.
